(19) Europäisches Patentamt
European Patent Office
Office européen des brevets

(11) EP 2 274 349 B1

(12) # EUROPÄISCHE PATENTSCHRIFT

(45) Veröffentlichungstag und Bekanntmachung des Hinweises auf die Patenterteilung:
**28.11.2012 Patentblatt 2012/48**

(21) Anmeldenummer: **09733230.8**

(22) Anmeldetag: **14.04.2009**

(51) Int Cl.:
***C08F 220/12*** *(2006.01)* ***C09J 7/02*** *(2006.01)*
***C09J 133/06*** *(2006.01)*

(86) Internationale Anmeldenummer:
**PCT/EP2009/054396**

(87) Internationale Veröffentlichungsnummer:
**WO 2009/127620 (22.10.2009 Gazette 2009/43)**

(54) **WÄSSRIGE POLYMERDISPERSIONEN FÜR HAFTKLEBSTOFFE**

AQUEOUS POLYMER DISPERSIONS FOR ADHESIVES

DISPERSIONS AQUEUSES DE POLYMÈRE POUR COLLES AUTOADHÉSIVES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.04.2008 EP 08154546**

(43) Veröffentlichungstag der Anmeldung:
**19.01.2011 Patentblatt 2011/03**

(73) Patentinhaber: **BASF SE**
**67056 Ludwigshafen (DE)**

(72) Erfinder:
- **GERST, Matthias**
  **67435 Neustadt (DE)**
- **AUCHTER, Gerhard**
  **67098 Bad Dürkheim (DE)**
- **FONSECA, Gledison**
  **68161 Mannheim (DE)**
- **BEYERS, Cornelis Petrus**
  **67122 Altrip (DE)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 274 349 B1

## Beschreibung

Die vorliegende Erfindung betrifft wässrige Polymerdispersionen mit einem Polymergehalt von wenigstens 55 Gew.-%, die für Haftklebstoffe geeignet sind. Die Erfindung betrifft auch ein Verfahren zur Herstellung dieser wässrigen Polymerdispersionen sowie die Verwendung der wässrigen Polymerdispersionen in Haftklebstoffen bzw. Haftklebstoffzusammensetzung, speziell in Haftklebstoffen für transparente Substrate, z.B. Kunststoffetiketten.

Haftklebstoffe (Pressure Sensitive Adhesives, PSA) auf Basis wässriger Polymerdispersionen, insbesondere auf Basis von Acrylatdispersionen finden breite Verwendung für die Herstellung selbstklebender Erzeugnisse, wie selbstklebende Folien, Klebebänder, Etiketten und dergleichen. Haftklebstoffe auf Basis wässriger Polymerdispersionen enthalten als Hauptbestandteil ein in wässriger Phase dispergiertes Polymer mit einer Glasübergangstemperatur von in der Regel unterhalb -10°C, das beim Trocknen der Dispersion einen bleibenden, klebrigen Film bildet, der schon unter geringem Druck bei Raumtemperatur an den verschiedensten Oberflächen haftet.

Die Qualität des Klebstoffs bzw. Klebstofffilms hängt maßgeblich von den Eigenschaften der wässrigen Polymerdispersion und des darin enthaltenen Polymers ab. Zum einen soll die Adhäsion des Klebstoff-Films auf einem hohen Niveau liegen, um eine gute Haftung auf dem zu beklebenden Substrat zu erreichen. Dies ist insbesondere bei unpolaren Substraten wie Kunststoffen und Kunststoff-Folien häufig problematisch. Gleichzeitig soll die innere Festigkeit (Kohäsion) des Klebstoff-Films ausreichend groß sein, dass beim Schneiden kein Fadenziehen oder Kantenaustritt auftritt, der zu einer Verschmutzung der Schneidwerkzeuge und einer Verklebung der Schnittflächen führen würde.

Weiterhin ist es wünschenswert, wenn die Polymerdispersionen einen hohen Polymergehalt aufweisen, damit bei der Herstellung der selbstklebenden Schichten weniger Wasser verdampft werden muss und somit die Beschichtung effizienter und rascher durchgeführt werden kann. Insbesondere bei modernen Beschichtungstechniken, wie dem berührungslosen "Curtain-Coating" sind Polymergehalte von wenigstens 55 Gew.-% wünschenswert. Mit steigendem Polymergehalt neigen jedoch wässrige Polymerdispersionen, insbesondere solche von Polymeren mit einer niedrigen Glasübergangstemperatur, zur Koagulation und Stippenbildung. Zudem steigt die Viskosität mit zunehmendem Feststoffgehalt stark an.

Bei Haftklebstoffen stellt sich zudem das Problem, dass die Beständigkeit des Klebefilms unter Feuchtigkeitseinwirkung nicht zufriedenstellend ist. Zudem kommt es häufig bei Einwirkung von Feuchtigkeit zu einer unschönen Eintrübung des Klebefilms, was insbesondere bei transparenten Substraten aus ästhetischen Gründen unerwünscht ist.

Für Haftklebstoffe geeignete wässrige Polymerdispersionen mit Polymergehalten oberhalb 55 Gew.-% sind beispielsweise aus WO 98/06763 A1, WO 98/07767 A1 und WO 00/68335 A1 bekannt. Die dort beschriebenen Haftklebstoffe zeichnen sich durch ein hohes Kohäsions- und Adhäsions-Niveau aus. Jedoch neigen Klebstoffschichten, die unter Verwendung derartiger Polymerdispersionen hergestellt wurden, bei Einwirkung von Feuchtigkeit zur Eintrübung bzw. zum Weißanlaufen, was im Hinblick auf eine Verwendung für transparente Etiketten unerwünscht ist.

Aus der EP 554832 A1 sind wässrige Polymerdispersionen für Haftklebstoffe bekannt, die ein Emulsionspolymerisat mit einer ionischen, einpolymerisierten oberflächenaktiven Substanz sowie ein nicht polymerisierbares hydrophobes Polymer enthalten. Die Kombination aus ionischer, copolymerisierbarer oberflächenaktiver Substanz und hydrophobem Polymer bewirkt eine gute Klebeeigenschaft auf unpolaren Oberflächen und eine gute Feuchtigkeitsbeständigkeit des Klebefilms. Die copolymerisierbaren oberflächenaktiven Substanzen sind jedoch vergleichsweise kostspielig. Zudem ist die Viskosität der erhaltenen Polymerdispersionen vergleichsweise hoch.

Die EP 845518 A1 beschreibt wässrige Polymerdispersionen für Haftklebstoffe, die Ca-$C_{13}$-Alkyl(meth)acrylate und polymerisierbare oberflächenaktive Substanzen einpolymerisiert enthalten. Die dort beschriebenen Polymerdispersionen weisen jedoch vergleichsweise geringe Feststoffgehalte von unterhalb 50 Gew.% auf und sind daher für moderne Beschichtungsverfahren wenig geeignet.

Aus der US 6,359,092 sind wässrige Polymerdispersionen für Haftklebstoffe bekannt, worin die Polymerteilchen spezielle ionische, polymerisierbare Emulgatoren einpolymerisiert enthalten und eine Teilchengröße von maximal 100 nm aufweisen.

Aus der WO 97/11996 A1 sind wässrige Polymerdispersionen auf Basis von Acrylatestem für Haftklebstoffe bekannt, die ein partiell wasserlösliches Monomer einpolymerisiert enthalten und worin die mittlere Teilchengröße einen Wert von 150 nm nicht überschreitet. Zwar zeichnen sich diese Polymerdispersionen durch ein verbessertes Weißanlaufverhalten aus. Die Viskosität der erhaltenen Polymerdispersionen, insbesondere bei erhöhten Feststoffgehalten ist jedoch unzufriedenstellend hoch.

Zusammenfassend ist festzustellen, dass aus dem Stand der Technik keine für Haftklebstoffe geeigneten Polymerdispersionen mit hohem Feststoffgehalt und vertretbaren Viskositäten bekannt sind, die gleichzeitig gute Klebeeigenschaften und eine geringe Neigung zum Weißanlaufen zeigen.

Der vorliegenden Erfindung liegt somit die Aufgabe zu Grunde, wässrige Polymerdispersionen für Haftklebstoffe bereitzustellen, die einerseits einen hohen Feststoffgehalt und eine vertretbare Viskosität von vorzugsweise nicht mehr als 1500 mPa.s (Brookfield-Viskosität, bestimmt nach DIN EN ISO 3219, 23°C, 100 $sec^{-1}$) aufweisen und gleichzeitig bei guten Klebeeigenschaften, d. h. hohen Kohäsions- und Adhäsions-Werten, eine geringe Neigung zum Weißanlaufen

bei Feuchtigkeitseinwirkung gewährleisten. Zudem ist es wünschenswert, diese Eigenschaften ohne Verwendung teurer polymerisierbarer Emulgatoren zu erreichen.

Es wurde überraschenderweise gefunden, dass diese und weitere Aufgaben durch wässrige Polymerdispersionen auf Basis ethylenisch ungesättigter Monomere mit einem Polymergehalt von wenigstens 55 Gew.-% und einer Glasübergangstemperatur des darin enthaltenen Polymeren von nicht mehr als -10°C gelöst werden, wenn die dispergierten Polymerpartikel eine polymodale Teilchengrößenverteilung aufweisen, worin wenigstens 70 Gew.-%, vorzugsweise wenigstens 75 Gew.-%, insbesondere wenigstens 80 Gew.%, besonders bevorzugt wenigstens 85 oder wenigstens 90 Gew.-% der Polymerpartikel einen Teilchendurchmesser unterhalt 350 nm, insbesondere unterhalb 340 nm, speziell unterhalb 330 nm aufweisen.

Dementsprechend betrifft die vorliegende Erfindung wässrige Polymerdispersionen mit einem Polymergehalt von wenigstens 55 Gew.-%, insbesondere wenigstens 58 Gew.-% und besonders bevorzugt wenigstens 60 Gew.-%, z.B. 55 bis 75 Gew.-%, insbesondere 58 bis 72 Gew.-% und besonders bevorzugt 60 bis 70 Gew.%, jeweils bezogen auf das Gesamtgewicht der Dispersion, worin das Polymer aus ethylenisch ungesättigten Monomeren M aufgebaut ist und eine Glasübergangstemperatur unterhalb -10°C, vorzugsweise von maximal -20°C, insbesondere maximal -30°C aufweist, worin die dispergierten Polymerpartikel eine polymodale Teilchengrößenverteilung aufweisen, worin wenigstens 70 Gew.-%, vorzugsweise wenigstens 75 Gew.-%, insbesondere wenigstens 80 Gew.%, besonders bevorzugt wenigstens 85 oder wenigstens 90 Gew.-% der Polymerpartikel einen Teilchendurchmesser unterhalt 350 nm, insbesondere unterhalb 340 nm, speziell unterhalb 330 nm aufweisen.

Die erfindungsgemäßen Polymerdispersionen sind mit einer Reihe von Vorteilen verbunden. So zeichnen sich die erfindungsgemäßen Polymerdispersionen auch bei Polymergehalten von wenigstens 55 Gew.-% und insbesondere wenigstens 58 Gew.-%, z. B. bei Polymergehalten im Bereich von 58 bis 75 Gew.-% und insbesondere im Bereich von 60 bis 70 Gew.-% durch vergleichsweise geringe Viskositäten aus. In der Regel weisen die erfindungsgemäßen Polymerdispersionen bei 23°C eine Brookfield-Viskosität (bestimmt nach DIN ISO EN 3219 bei 23°C, 100 $sec^{-1}$) von nicht mehr als 1500 mPa.s, insbesondere nicht mehr als 1300 mPa.s und besonders bevorzugt nicht mehr als 1000 mPa.s, z. B. 50 bis 1500 mPa.s, insbesondere 80 bis 1300 mPa.s und insbesondere 100 bis 1000 mPa.s aus. Die erfindungsgemäßen Polymerdispersionen zeichnen sich zudem durch gute Kohäsions- und Adhäsions-Werte sowie durch eine gering Neigung der aus ihnen hergestellten Haftklebefilme zum Weißanlaufen bei Einwirkung von Feuchtigkeit aus. Außerdem zeichnen sich die erfindungsgemäßen Polymerdispersionen durch gute Scherstabilitäten und eine geringe Neigung zur Koagulat- und Stippenbildung aus.

Die hier angegebenen Teilchengrößen und Teilchengrößenverteilungen beziehen sich auf die durch Zentrifugieren ermittelten, nach Massenanteilen diskriminieren Teilchendurchmesser bei 23°C. Die Bestimmung erfolgt typischerweise mittels einer Ultrazentrifuge nach Standardverfahren, z.B. nach dem von H. Cölfen, "Analytical Ultracentrifugation of Nanoparticles" in Encyclopedia of Nanoscience and Nanotechnology, (American Scientific Publishers, 2004), S. 67-88 oder W. Mächtle und L. Börger in "Analytical Ultracentrifugation of Polymers and Nanoparticles", (Springer, Berlin, 2006) beschriebenen Methoden.

Die erfindungsgemäßen Polymerdispersionen weisen eine polymodale Teilchengrößenverteilung auf. Mit anderen Worten, die nach Massenanteilen diskriminierte Verteilung der Teilchengrößen der in der Dispersion enthaltenen Polymerpartikel weicht deutlich von einer monomodalen, d. h. Gauß'sche Verteilung ab und besitzt in der Regel wenigstens zwei ausgeprägte Maxima, welche sich in der Regel um wenigstens 50 nm, insbesondere wenigstens 100 nm unterscheiden. Die Polymodalität einer Teilchengrößenverteilung lässt sich üblicherweise durch den sog. Polydispersitätsindex Q charakterisieren:

$$Q = \frac{d_{90} - d_{10}}{d_{50}}$$

worin

$d_{10}$ für den Teilchendurchmesser steht, den 10 Gew.-% der Polymerteilchen unterschreiten

$d_{50}$ für den Teilchendurchmesser steht, den 50 Gew.% der Polymerteilchen unterschreiten und

$d_{90}$ für den Teilchendurchmesser steht, den 90 Gew.-% der Polymerteilchen unterschreiten.

Während monomodale Teilchengrößenverteilungen in der Regel durch einen Polydispersitätsindex Q von unterhalb 0,3, z. B. 0,05 bis 0,3 charakterisiert sind, weisen polymodale Polymerdispersionen typischerweise einen Polydispersitätsindex Q von deutlich oberhalb 0,3 auf, der in der Regel wenigstens 0,4, häufig wenigstens 0,5 und insbesondere wenigstens 0,6 beträgt, z. B. im Bereich von 0,4 bis 2, insbesondere 0,5 bis 1,5 und speziell 0,6 bis 1,2 liegt.

Im Hinblick auf ihre Verwendung in Haftklebstoffen sind erfindungsgemäße Polymerdispersionen bevorzugt, worin wenigstens 70 Gew.-%, insbesondere wenigstens 75 Gew.-% und speziell wenigstens 80 Gew.-% der Polymerpartikel einen Teilchendurchmesser unterhalb 340 nm oder wenigstens 80 Gew.-%, insbesondere wenigstens 85 Gew.-

% und speziell wenigstens 90 Gew.-% der Polymerpartikel einen Teilchendurchmesser unterhalb 360 nm und insbesondere wenigstens 80 Gew.-% und speziell wenigstens 90 Gew.-% der Polymerpartikel einen Teilchendurchmesser unterhalb 330 nm aufweisen. Dementsprechend beträgt der $d_{90}$-Wert in Formel Q vorzugsweise nicht mehr als 350 nm und insbesondere nicht mehr als 340 nm. Typischerweise liegt der $d_{90}$-Wert im Bereich von 150 bis 350 nm und speziell im Bereich von 200 bis 340 nm.

Es ist ebenfalls bevorzugt, wenn nicht mehr als 20 Gew.-% und insbesondere nicht mehr als 10 Gew.-% der Polymerteilchen einen Teilchendurchmesser unterhalb 70 nm aufweisen. Es ist besonders bevorzugt, wenn weniger als 20 Gew.-% und insbesondere weniger als 10 Gew.-% der Polymerpartikel einen Teilchendurchmesser unterhalb 80 nm oder gar unterhalb 90 nm aufweisen. Dementsprechend beträgt $d_{10}$ in Formel Q vorzugsweise wenigstens 70 nm, insbesondere wenigstens 80 nm und speziell wenigstens 90 nm und liegt beispielsweise im Bereich von 70 bis 150 nm, häufig im Bereich von 80 bis 140 nm und speziell im Bereich von 90 bis 130 nm.

In den erfindungsgemäßen Polymerdispersionen liegt der gewichtsmittlere Teilchendurchmesser ($d_{50}$-Wert) typischerweise im Bereich von 90 bis 320 nm.

Im Hinblick auf die erfindungsgemäße Verwendung als Haftklebstoffe hat es sich weiterhin als vorteilhaft erwiesen, wenn 10 bis 60 Gew.-% und insbesondere 15 bis 50 Gew.-% der Polymerpartikel in der Polymerdispersion einen Teilchendurchmesser im Bereich von 70 bis 180 nm und speziell im Bereich von 80 bis 150 nm aufweisen und 40 bis 90 Gew.-%, insbesondere 50 bis 85 Gew.-% der Polymerpartikel einen Teilchendurchmesser im Bereich von 180 bis 340 nm und speziell im Bereich von 200 bis 330 nm aufweisen.

Die wässrigen Polymerdispersionen weisen erfindungsgemäß eine Glasübergangstemperatur unterhalb -10°C, vorzugsweise von nicht mehr als -20°C und insbesondere nicht mehr als -30°C auf. In der Regel liegt die Glasübergangstemperatur im Bereich von -10 bis -60°C, vorzugsweise im Bereich von -20 bis -55°C und insbesondere im Bereich von -30 bis -50°C. Die hier angegebenen Glasübergangstemperaturen lassen sich nach üblichen Methoden wie Differenzialthermoanalyse oder Differential Scanning Calorimetry (siehe z. B. ASTM 3418/82, sog. Midpoint Temperature) bestimmen.

Die Polymere in den wässrigen Polymerdispersionen sind aus ethylenisch ungesättigten Monomeren M aufgebaut, wie sie typischerweise in wässrigen Polymerdispersionen für Haftklebstoffe eingesetzt werden. Die erfindungsgemäßen Vorteile kommen insbesondere bei wässrigen Polymerdispersionen auf Basis von Alkylacrylaten zum Tragen. In derartigen Polymerdispersionen enthält das Polymer in der Regel wenigstens 65 Gew.-%, häufig wenigstens 70 Gew.-% wenigstens eines $C_2$-$C_{12}$-Alkylacrylats in einpolymerisierter Form. $C_2$-$C_{12}$-Alkylacrylate werden im Folgenden auch als Monomere a) bezeichnet. Dementsprechend umfassen die das Polymer konstituierenden ethylenisch ungesättigten Monomere M in der Regel wenigstens 65 Gew.-%, häufig wenigstens 70 Gew.-%, insbesondere wenigstens 75 Gew.-%, z. B. 65 bis 100 Gew.-%, in der Regel 65 bis 99,8 Gew.-%, häufig 70 bis 99 Gew.-% und insbesondere 75 bis 95 Gew.-% wenigstens ein unter $C_2$-$C_{12}$-Alkylacrylaten ausgewähltes Monomer.

Als Monomere a) sind solche $C_2$-$C_{12}$-Alkylacrylate bevorzugt, deren Homopolymer eine Glasübergangstemperatur Tg von höchstens -10°C, insbesondere höchstens -20°C und insbesondere höchstens -30°C aufweist. Beispiele für geeignete $C_2$-$C_{12}$-Alkylacrylate sind Ethylacrylat, Propylacrylat, Isopropylacrylat, n-Butylacrylat, 2-Butylacrylat, Isobutylacrylat, n-Pentylacrylat, n-Hexylacrylat, 2-Ethylhexylacrylat, n-Heptylacrylat, Isoheptylacrylat, n-Octylacrylat, Isooctylacrylat, 2-Propylheptylacrylat, Decylacrylat, Isodecylacrylat, Dodecylacrylat und Isododecylacrylat. und deren Mischungen. Bevorzugte $C_2$-$C_{12}$-Alkylacrylate sind n-Butylacrylat, n-Hexylacrylat, 2-Ethylhexylacrylat, Isooctylacrylat, 2-Propylheptylacrylat, Decylacrylat und Isodecylacrylat sowie Mischungen der vorgenannten bevorzugten Alkylacrylate, z. B. eine Mischung aus n-Butylacrylat mit 2-Ethylhexylacrylat und/oder mit 2-Propylheptylacrylat.

Neben den vorgenannten Alkylacrylaten umfassen die das Polymer konstituierenden Monomere M in der Regel bis zu 35 Gew.-%, häufig bis zu 30 Gew.-%, insbesondere bis zu 25 Gew.-%, z. B. 0,2 bis 35 Gew.-%, häufig 1 bis 30 Gew.-% und insbesondere 5 bis 25 Gew.-%, jeweils bezogen auf das Gesamtgewicht der Monomere M ein oder mehrere, von $C_2$-$C_{12}$-Alkylacrylaten verschiedene monoethylenisch ungesättigte Monomere, wie sie in Haftklebstoffen üblicherweise Anwendung finden. Beispiele für geeignete weitere Monomere sind:

b) Monoethylenisch ungesättigte Monomere mit einer begrenzten Wasserlöslichkeit von in der Regel nicht mehr als 60 g/L bei 20°C (im folgenden Monomere b) wie Methylacrylat, vinylaromatische Monomere wie Styrol, $\alpha$-Methylstyrol, Vinyltoluol, 4-n-Butylstyrol und 4-tert.-Butylstyrol, Vinylester aliphatischer $C_2$-$C_{10}$-Carbonsäuren wie Vinylacetat und Vinylpropionat, $C_1$-$C_{12}$-Alkylmethacrylate, Phenoxyalkylester monoethylenisch ungesättigter $C_3$-$C_8$-Monocarbonsäuren, insbesondere 2-Phenoxyethylacrylat und -methacrylat, monoethylenisch ungesättigte Nitrile wie Acrylnitril und Methacrylnitril. Der Anteil der Monomere b), beträgt häufig 1 bis 30 Gew.-%, insbesondere 4 bis 25 Gew.-%, bezogen auf das Gesamtgewicht der Monomere M;

c) neutrale, monoethylenisch ungesättigte Monomere mit einer erhöhten Wasserlöslichkeit von in der Regel wenigstens 80 g/L und insbesondere wenigstens 100 g/L bei 20°C, beispielsweise Amide monoethylenisch ungesättigter $C_3$-$C_8$-Monocarbonsäuren wie Acrylamid und Methacrylamid und Hydroxy-$C_2$-$C_4$-alkylester monoethylenisch un-

gesättigter $C_3$-$C_8$-Monocarbonsäuren, insbesondere $C_2$-$C_4$-Hydroxyalkylacrylate- und -methacrylate wie 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat und 4-Hydroxybutylmethacrylat und deren Gemische. Anteil der Monomere c) and den Monomeren M wird in der Regel 10 Gew.-% nicht überschreiten und beträgt, sofern vorhanden, typischerweise 0,1 bis 10 Gew.-%, häufig 0,2 bis 5 Gew.-% und insbesondere 0,5 bis 4 Gew.-%, bezogen auf die Gesamtmenge der Monomere M;

d) monoethylenisch ungesättigte Monomere mit einer Säuregruppe, insbesondere einer Carboxyl-Gruppe (COOH) oder einer Hydroxysulfonyl-Gruppe ($SO_3H$) und deren Salze, beispielsweise monoethylenisch ungesättigte $C_3$-$C_8$-Monocarbonsäuren wie Acrylsäure, Methacrylsäure, Crotonsäure, Isocrotonsäure, monoethylenisch ungesättigte $C_4$-$C_8$-Dicarbonsäuren wie Maleinsäure, Fumarsäure und Itaconsäure, monoethylenisch ungesättigte Sulfonsäuren wie Vinylsulfonsäure, Methallylsulfonsäure, 2-Acrylamido-2-methylpropansulfonsäure. Der Anteil der Monomere mit wenigstens einer Säuregruppe beträgt, sofern vorhanden 0,1 bis 5 Gew.-%, insbesondere 0,2 bis 3 Gew.-% und speziell 0,5 bis 2,5 Gew.-%, bezogen auf die Gesamtmenge der Monomere M. Bevorzugte Monomere d) sind solche mit wenigstens einer Carboxylgruppe und insbesondere Acrylsäure und Methacrylsäure sowie deren Gemische.

In einer bevorzugten Ausführungsform der Erfindung umfassen die das Polymer konstituierenden Monomere M 0,1 bis 30 Gew.-%, häufig 1 bis 30 Gew.-% und insbesondere 4 bis 25 Gew.-% monoethylenisch ungesättigte Monomere b)), die vorzugsweise unter Methylacrylat, $C_1$-$C_{12}$-Alkylmethacrylaten und vinylaromatischen Monomeren ausgewählt sind. Besonders bevorzugte Monomere b) sind Methylacrylat, $C_1$-$C_4$-Alklymethacrylate, insbesondere Methylmethacrylat und Styrol. Hierunter sind insbesondere solche Polymerdispersionen bevorzugt, worin die Monomere M, bezogen auf ihr Gesamtgewicht, 1 bis 30 Gew.-%, insbesondere 3 bis 20 Gew.-%, wenigstens eines unter Methylacrylat, $C_1$-$C_4$-Alkylmethacrylaten, speziell Methylmethacrylat, und deren Mischungen ausgewähltes erstes Monomer b (Monomer b.1) und bis zu 5 Gew.-%, z. B. 0,1 bis 5 Gew.-%, insbesondere 0,5 bis 4 Gew.-% und speziell 1 bis 3 Gew.-% wenigstens eines vinylaromatischen Monomeren (Monomere b.2), speziell Styrol, umfassen, wobei die Gesamtmenge der Monomere b.1 plus b.2 1 bis 30 Gew.-% und insbesondere 4 bis 25 Gew.-%, bezogen auf das Gesamtgewicht der Monomere M ausmacht. Weiterhin hat es sich als vorteilhaft erwiesen, wenn die Monomere M wenigstens ein monoethylenisch ungesättigtes Monomer mit wenigstens einer Hydroxyalkylgruppe umfassen. Diese Monomere werden im Folgenden auch als Monomere c) bezeichnet. Bevorzugte Monomere c) sind ausgewählt unter $C_2$-$C_4$-Hydroxyalkylacrylaten und -methacrylaten wie 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat und 4-Hydrocybutylmethacrylat. Der Anteil der Monomere c) and den Monomeren M beträgt typischerweise 0,1 bis 10 Gew.-%, häufig 0,5 bis 5 Gew.-% und insbesondere 1 bis 4 Gew.-%, bezogen auf die Gesamtmenge der Monomere M.

Weiterhin hat es sich als vorteilhaft erwiesen, wenn die das Polymer konstituierenden Monomere M nicht mehr als 5 Gew.-% monoethylenisch ungesättigte Monomere mit wenigstens einer Säuregruppe umfassen (im Folgenden Monomere d)). Der Anteil der Monomere mit wenigstens einer Säuregruppe beträgt, sofern vorhanden 0,1 bis 5 Gew.-%, insbesondere 0,2 bis 3 Gew.-% und speziell 0,5 bis 2,5 Gew.-%, bezogen auf die Gesamtmenge der Monomere M. Bevorzugte Monomere d) sind solche mit wenigstens einer Carboxylgruppe und insbesondere Acrylsäure und Methacrylsäure sowie deren Gemische.

Das erfindungsgemäße Polymer kann neben den vorgenannten monoethylenisch ungesättigten Monomeren auch geringe Mengen mehrfach ethylenisch ungesättigter Monomere umfassen, welche bei der Herstellung des Polymeren zu einer Vernetzung führen. Der Anteil derartiger Monomere wird jedoch in der Regel 1 Gew.-%, insbesondere 0,5 Gew.-% und speziell 0,1 Gew.-%, bezogen auf die Gesamtmenge der das Polymer konstituierenden Monomere M nicht überschreiten. Beispiele für mehrfach ethylenisch ungesättigte Monomere sind Diester und Triester ethylenisch ungesättigter Carbonsäuren, insbesondere die Bis- und Trisacrylate von Diolen oder Polyolen mit 3 oder mehr OH-Gruppen, z. B. die Bisacrylate und die Bismethacrylate von Ethylenglykol, Diethylenglykol, Triethylenglykol, Neopentylglykol oder Polyethylenglykolen, Vinyl und Allylester gesättigter oder ungesättigter Dicarbonsäuren sowie die Vinyl und Allylester monoethylenisch ungesättigter Monocarbonsäuren.

In einer bevorzugten Ausführungsform der vorliegenden Erfindung ist das Polymer zu wenigstens 99 Gew.-%, insbesondere zu wenigstens 99,5 Gew.-% und speziell zu wenigstens 99,9 Gew.-% oder 100 Gew.-% aufgebaut aus monoethylenisch ungesättigten Monomeren M, wobei die Monomere M in diesem Fall vorzugsweise die folgenden Monomere umfassen:

a) 65 bis 99,8 Gew.-%, insbesondere 70 bis 99 Gew.-% und speziell 75 bis 95 Gew.-% Monomere a), die unter $C_2$-$C_{12}$-Alkylacrylaten und deren Gemischen ausgewählt sind;

b) 0,1 bis 35 Gew.-%, insbesondere 1 bis 30 Gew.-% und speziell 4 bis 25 Gew.-% Monomere b), die unter Me-

thylacrylat, $C_1$-$C_{12}$-Alkylmethacrylaten und vinylaromatischen Monomeren, insbesondere unter Methylacrylat, $C_1$-$C_4$-Alkylmethacrylaten und Styrol und speziell unter Methylacrylat, Methylmethacrylat und Styrol sowie unter deren Mischungen ausgewählt sind;

c) 0,1 bis 10 Gew.-%, insbesondere 0,2 bis 5 Gew.-% und speziell 0,5 bis 4 Gew.-% Monomere c), die unter monoethylenisch ungesättigten Monomeren mit wenigstens einer Hydroxyalkylgruppe und insbesondere unter den vorgenannten $C_2$-$C_4$-Hydroxyalkylacrylaten und -methacrylaten sowie deren Gemischen ausgewählt sind; und

d) 0 bis 5 Gew.-%, häufig 0,1 bis 5 Gew.-%, insbesondere 0,2 bis 3 Gew.-% und speziell 0,5 bis 2,5 Gew.-% Monomere d), die unter monoethylenisch ungesättigten Monomeren mit wenigstens einer Säuregruppe, insbesondere monoethylenisch ungesättigten $C_3$-$C_6$-Monocarbonsäuren und speziell Acrylsäure und Methacrylsäure sowie deren Mischungen ausgewählt sind.

In einer besonders bevorzugten Ausführungsform der vorliegenden Erfindung ist das Polymer zu wenigstens 99 Gew.-%, insbesondere zu wenigstens 99,5 Gew.-% und speziell zu wenigstens 99,9 Gew.-% oder 100 Gew.-% aufgebaut aus monoethylenisch ungesättigten Monomeren M, wobei die Monomere M in diesem Fall vorzugsweise die folgenden Monomere umfassen:

a) 65 bis 99,8 Gew.-%, insbesondere 70 bis 99 Gew.-% und speziell 75 bis 95 Gew.-% Monomere a), die unter $C_2$-$C_{12}$-Alkylacrylaten und deren Gemischen ausgewählt sind;

b.1) 0,1 bis 35 Gew.-%, insbesondere 1 bis 30 Gew.-% und speziell 3 bis 20 Gew.-% Monomere b.1), die unter Methylacrylat und $C_1$-$C_{12}$-Alkylmethacrylaten, insbesondere unter Methylacrylat und Methylmethacrylat sowie unter deren Mischungen ausgewählt sind;

b.2) 0,1 bis 5 Gew.-%, insbesondere 0,5 bis 4 Gew.-%, speziell 1 bis 3 Gew.-% wenigstens eines vinylaromatischen Monomeren (Monomere b.2), speziell Styrol;

c) 0,1 bis 10 Gew.-%, insbesondere 0,2 bis 5 Gew.-% und speziell 0,5 bis 4 Gew.-% Monomere c), die unter monoethylenisch ungesättigten Monomeren mit wenigstens einer Hydroxyalkylgruppe und insbesondere unter den vorgenannten $C_2$-$C_4$-Hydroxyalkylacrylaten und -methacrylaten sowie deren Gemischen ausgewählt sind; und

d) 0 bis 5 Gew.-%, häufig 0,1 bis 5 Gew.-%, insbesondere 0,2 bis 3 Gew.-% und speziell 0,5 bis 2,5 Gew.-% Monomere d), die unter monoethylenisch ungesättigten Monomeren mit wenigstens einer Säuregruppe, insbesondere monoethylenisch ungesättigten $C_3$-$C_6$-Monocarbonsäuren und speziell Acrylsäure und Methacrylsäure sowie deren Mischungen ausgewählt sind.

Neben dem Polymer enthalten die wässrigen Polymerdispersionen typischerweise noch wenigstens eine oberflächenaktive Substanz zur Stabilisierung der Polymerpartikel. Hierzu zählen ionische und nicht ionische Emulgatoren sowie ionische und nichtionische Schutzkolloide bzw. Stabilisatoren. Unter Emulgatoren versteht man im Unterschied zu Schutzkolloiden oberflächenaktive Substanzen, deren Molekulargewicht (Zahlenmittel) üblicherweise unterhalb 2000 g/mol und speziell unterhalt 1500 g/mol liegt. Bei Schutzkolloiden wiederum handelt es sich üblicherweise um in Wasser lösliche Polymere mit einem zahlenmittleren Molekulargewicht oberhalb 2000 g/mol, z. B. im Bereich von 2000 bis 100000 g/mol und insbesondere im Bereich von 5000 bis 50000 g/mol. Selbstverständlich können Schutzkolloide und Emulgatoren im Gemisch eingesetzt werden.

Die Menge an oberflächenaktiver Substanz liegt üblicherweise im Bereich von 0,1 bis 10 Gew.-%, vorzugsweise 0,2 bis 5 Gew.-%, bezogen auf 100 Gew.-% Polymer bzw. auf 100 Gew.-% der das Polymer konstituierenden Monomere M.

Vorzugsweise enthalten die erfindungsgemäßen Polymerdispersionen neben dem Polymer ausschließlich Emulgatoren. Insbesondere hat es sich bewährt, wenn die Polymerdispersion eine Kombination aus wenigstens einem anionischen und wenigstens einem nicht ionischen Emulgator als oberflächenaktive Substanz enthält.

Zu den anionischen Emulgatoren zählen üblicherweise aliphatische Carbonsäuren mit in der Regel wenigstens 10 C-Atomen sowie deren Salze, insbesondere deren Ammonium- und Alkalimetallsalze, aliphatische, araliphatische und aromatische Sulfonsäuren mit in der Regel wenigstens 6 C-Atomen sowie deren Salze, insbesondere deren Ammonium- und Alkalimetallsalze, Schwefelsäurehalbester ethoxylierter Alkanole und Alkylphenole sowie deren Salze, insbesondere deren Ammonium- und Alkalimetallsalze sowie Alkyl-, Aralkyl- und Arylphosphate einschließlich Phosphorsäurehalbester von Alkanolen und Alkylphenolen.

Beispiele für geeignete anionische Emulgatoren sind: Alkalimetallsalze von Dialkylestern der Sulfobernsteinsäure sowie Alkali- und Ammoniumsalze von Alkylsulfaten (Alkylrest: $C_8$- bis $C_{12}$), von Schwefelsäurehalbestern ethoxylierter Alkanolen (EO-Grad: 4 bis 30, Alkylrest: $C_{12}$- bis $C_{18}$), von Schwefelsäurehalbestern ethoxylierter Alkylphenole (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$). Beispiele für geeignete Emulgatoren sind auch die im Folgenden angegebenen Verbindungen der allgemeinen Formel

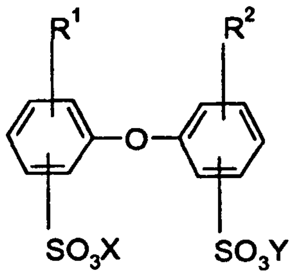

worin $R^1$ und $R^2$ Wasserstoff oder $C_4$- bis $C_{18}$-Alkyl bedeuten und nicht gleichzeitig Wasserstoff sind, und X und Y Alkalimetallionen und/oder Ammoniumionen sein können. Vorzugsweise bedeuten $R^1$, $R^2$ lineare oder verzweigte Alkylreste mit 6 bis 14 C-Atomen oder Wasserstoff und insbesondere mit 6, 12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen, in denen X und Y Natrium, $R^1$ ein verzweigter Alkylrest mit 12 C-Atomen und $R^2$ Wasserstoff ist oder eine der für $R^1$ angegebenen, von Wasserstoff verschiedenen Bedeutungen hat. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete nichtionische Emulgatoren sind typischerweise ethoxylierte Alkanole mit 8 bis 36 C-Atomen im Alkylrest, ethoxylierte Mono-, Di- und Tri-Alkylphenole mit typischerweise 4 bis 12 C-Atomen in den Alkylresten, wobei die ethoxylierten Alkanole und Alkylphenole typischerweise einen Ethoxylierungsgrad im Bereich von 3 bis 50 aufweisen.

Weitere geeignete Emulgatoren finden sich beispielsweise in Houben-Weyl, Methoden der organischen Chemie, Band 14/1, Makromolekulare Stoffe, Georg Thieme Verlag, Stuttgart, 1961, S. 192 bis 208.

Geeignete Emulgatoren sind kommerziell erhältlich, beispielsweise unter den Handelsbezeichnungen Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® I-SC, Lumiten® E 3065, Disponil® FES 77, Lutensol® AT 18, Steinapol VSL, Emulphor NPS 25.

Erfindungsgemäß handelt es sich um wässrige Polymerdispersionen, d. h. das Polymer liegt als heterogene Phase in Form feinteiliger Partikel mit den oben angegebenen Polymerteilchengrößen in einer homogenen wässrigen Phase vor. Die homogene wässrige Phase kann neben Wasser sowie den bei der Herstellung typischerweise eingesetzten Hilfsstoffen wie oberflächenaktiven Substanzen, Säuren, Basen, Zerfallsprodukten aus der Emulsionspolymerisation noch geringe Mengen an mit Wasser mischbaren organischen Lösungsmitteln enthalten. Der Anteil der zuletzt genannten Komponenten wird typischerweise 1 Gew.-%, bezogen auf das Gesamtgewicht der Dispersion nicht überschreiten.

Zur Herstellung der erfindungsgemäßen wässrigen Polymerdispersionen kann man grundsätzlich so vorgehen, dass man die aus dem Stand der Technik bekannten Verfahren zur Herstellung von Polymerdispersionen mit polymodaler Polymerteilchengrößenverteilung anwendet. Zu nennen sind beispielsweise das Vermischen wenigstens zweier verschiedener Polymerdispersionen mit monomodaler Teilchengrößenverteilung, wobei sich die Polymerdispersionen in ihrer mittleren Teilchengröße unterscheiden wie beispielsweise beschrieben in EP 81083 und WO 84/04491. Es ist außerdem möglich, die erfindungsgemäßen Polymerdispersionen durch eine radikalische wässrige Emulsionspolymerisation ethylenisch ungesättigter Monomere in Gegenwart zwei verschiedener Saatlatices, die sich in ihrer mittleren Teilchengröße unterscheiden, herzustellen. Ein solches Verfahren ist ebenfalls beschrieben in EP 81083. Zur Herstellung der erfindungsgemäßen Polymerdispersionen kann man auch so vorgehen, dass man eine radikalische wässrige Emulsionspolymerisation der Monomere M nach einem Monomerzulaufverfahren durchführt, bei dem man im Verlauf der Polymerisation, wenn bereits ein Teil der Monomere polymerisiert ist, eine größere Emulatormenge zusetzt, welche die Bildung einer neuen Teilchengeneration initiiert. Ein solches Verfahren ist beispielsweise aus EP 8775 bekannt.

Für die erfindungsgemäßen Polymerdispersionen hat es sich allerdings als vorteilhaft erwiesen, wenn man das im Folgenden beschriebene Verfahren einer radikalischen wässrigen Emulsionspolymerisation der das Polymer konstituierenden Monomere M anwendet. Bei diesem Verfahren führt man eine radikalische, wässrige Emulsionspolymerisation der ethylenisch ungesättigten Monomere M nach einem Monomerzulaufverfahren durch, wobei man im Polymerisationsreaktor wenigstens ein teilchenförmiges Saatpolymer 1 vorlegt und wobei man im Verlauf der Polymerisation wenigstens ein weiteres Saatpolymer 2 in Form einer wässrigen Dispersion zugibt.

Unter einem Monomerzulaufverfahren versteht man hier und im Folgenden, dass man wenigstens 95 % und insbesondere wenigstens 99 % der zu polymerisierenden Monomere unter Polymerisationsbedingungen in einen Polymerisationsreaktor gibt, in dem sich bereits ein erstes teilchenförmiges Saatpolymer, typischerweise in Form einer wässrigen Dispersion des Saatpolymeren, befindet.

Unter dem Begriff "Saatpolymer" versteht der Fachmann ein feinteiliges Polymer in Form einer wässrigen Polymerdispersion. Die gewichtsmittlere Teilchengröße der im erfindungsgemäßen Verfahren eingesetzten Saatpolymere (Gewichtsmittel, $d_{50}$-Wert) liegt typischerweise unterhalb 200 nm, häufig im Bereich von 10 bis 150 nm und insbesondere im Bereich von 20 bis 120 nm. Bei dem vorgelegten Saatpolymer, d. h. bei dem zu Beginn der Polymerisation im Polymerisationsreaktor befindlichen ersten teilchenförmigen Saatpolymer 1, liegt die gewichtsmittlere Teilchengröße typischerweise im Bereich von 20 bis 150 nm und vorzugsweise im Bereich von 25 bis 120 nm. Bei dem im Verlauf der Polymerisation zugegebenen weiteren Saatpolymer 2 liegt die gewichtsmittlere Teilchengröße vorzugsweise im Bereich von 5 bis 120 nm und insbesondere im Bereich von 10 bis 100 nm.

Die Monomerzusammensetzung der Saatpolymere ist von untergeordneter Bedeutung. Geeignet sind sowohl Saatpolymere, die überwiegend aus vinylaromatischen Monomeren und insbesondere aus Styrol aufgebaut sind (sogenannte Styrol-Saat), als auch Saatpolymere, die überwiegend aus $C_1$-$C_{10}$-Alkylacrylaten und/oder $C_1$-$C_{10}$-Alkylmethacrylaten, z. B. aus einer Mischung aus Butylacrylat und Methylmethacrylat aufgebaut sind. Neben diesen Hauptmonomeren, die typischerweise wenigstens 80 Gew.-% und insbesondere wenigstens 90 Gew.-% des Saatpolymeren ausmachen, können die Saatpolymere auch davon verschiedene Monomere, insbesondere solche mit einer erhöhten Wasserlöslichkeit, z. B. Monomere mit wenigstens einer Säurefunktion und/oder neutrale Monomere mit erhöhter Wasserlöslichkeit einpolymerisiert enthalten. Der Anteil derartiger Monomere wird in der Regel 20 Gew.-% und insbesondere 10 Gew.-% nicht überschreiten und liegt, sofern vorhanden, typischerweise im Bereich von 0,1 bis 10 Gew.-%, bezogen auf die Gesamtmenge der das Saatpolymer konstituierenden Monomere.

In der Regel wird man das erste Saatpolymer 1 in einer Menge von 0,1 bis 2 Gew.-%, insbesondere in einer Menge von 0,2 bis 1 Gew.-%, bezogen auf die Gesamtmenge der zu polymerisierenden Monomere M einsetzen. Bevorzugt handelt es sich bei dem ersten Saatpolymer um eine sogenannte Acrylat-Saat.

Das im Verlauf der Polymerisationsreaktion zugegebene Saatpolymer 2 wird typischerweise in einer Menge von 0,05 bis 2 Gew.-%, insbesondere in einer Menge von 0,1 bis 1 Gew.-% und speziell in einer Menge von 0,1 bis 0,5 Gew.-%, bezogen auf die Gesamtmenge der zu polymerisierenden Monomere eingesetzt. Die Zugabe des Saatpolymers 2 erfolgt in der Regel frühestens dann, wenn bereits wenigstens 10 Gew.-% und insbesondere wenigstens 20 Gew.-% der zu polymerisierenden Monomere M sich im Polymerisationsreaktor befinden. Die Zugabe des Saatpolymeren 2 wird in der Regel spätestens dann beendet, wenn sich 90 %, insbesondere 80 %, besonders bevorzugt 70 % oder speziell 60 % der zu polymerisierenden Monomere im Reaktionsreaktor befinden. Die Zugabe des Saatpolymers 2 kann in einer Portion, in mehreren Portionen oder kontinuierlich erfolgen. Besonders bevorzugt ist ein so genannter "Saatschuss", d. h. das Saatpolymer wird über einen kurzen Zeitraum, der in der Regel 5 Minuten nicht überschreitet, unter Polymerisationsbedingungen in den Polymerisationsreaktor gegeben. Der Saatschuss erfolgt typischerweise, wenn sich 10 bis 90 Gew.-%, insbesondere 10 bis 80 Gew.-%, besonders bevorzugt 15 bis 70 Gew.-% und speziell 20 bis 60 Gew.-% der zu polymerisierenden Monomere M im Polymerisationsreaktor befinden.

Durch die Menge des Saatpolymeren 1 bzw. durch das Verhältnis von Saatpolymer 1 zu den Monomeren M lässt sich die maximale Teilchengröße der Polymerisatteilchen der Dispersion einstellen. Ein geringer Anteil an Saatpolymer 1, bezogen auf die Monomere M, führt in der Regel zu größeren Polymerteilchen, wohingegen eine größere Menge an Saatpolymer 1 in der Regel zu kleineren Polymerteilchen führt. Durch den Zeitpunkt der Zugabe des zweiten Saatpolymeren und durch das Gewichtsverhältnis von Saatpolymer 2 zu den Monomeren M werden insbesondere die Teilchengröße und der Gewichtsanteil der kleineren Polymerpartikel in der Dispersion eingestellt. Je früher die Zugabe des zweiten Saatpolymers 2 erfolgt, desto höher ist der Anteil kleinerer Polymerteilchen in der Polymerdispersion. Gleichzeitig nimmt jedoch die Größe der kleineren Teilchen zu, so dass der $d_{10}$-Wert bei einer frühen Zugabe des Saatpolymers 2 größer ist als bei einer späteren Zugabe. Ähnliches gilt für die Menge des Saatpolymers 2. Je größer das Verhältnis von Saatpolymer 2 zu den zu polymerisierenden Monomeren ist, desto größer ist der Anteil kleinerer Polymerteilchen und desto größer ist der $d_{10}$-Wert der Teilchengrößenverteilung.

Die radikalische wässrige Emulsionspolymerisation erfolgt typischerweise in Gegenwart oberflächenaktiver Substanzen wie zuvor beschrieben. Vorzugsweise werden im erfindungsgemäßen Verfahren ausschließlich Emulgatoren eingesetzt. Insbesondere hat es sich bewährt, eine Kombination aus wenigstens einem anionischen und wenigstens einem nicht ionischen Emulgator als oberflächenaktive Substanz zu verwenden.

Typischerweise werden die grenzflächenaktiven Substanzen in Mengen von 0,1 bis 10 Gew.-%, insbesondere in Mengen von 0,2 bis 5 Gew.-%, bezogen auf das Gewicht der zu polymerisierenden Monomere M eingesetzt.

Bei den zur radikalischen Emulsionspolymerisation eingesetzten Initiatoren handelt es sich üblicherweise um wasserlösliche, Radikale bildende Substanzen

Wasserlösliche Initiatoren für die Emulsionspolymerisation sind organische oder anorganische Peroxid-Verbindungen, d. h. Verbindungen mit wenigstens einer Peroxid- oder Hydroperoxid-Gruppe, z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Peroxid-Verbindungen. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 1 Gew.-%, bezogen auf die zu polymerisierenden Monomere M. Hierdurch wird die Molmasse des Polymerisats verringert. Geeignet sind beispielsweise Verbindungen mit einer Thiol-Gruppe wie tert.-Butylmercaptan, Mercaptoethanol, Thioglykolsäure, Thioglykolsäureethylester, Mercaptopropyltrimethoxysilan und tert.-Dodecylmercaptan. Gegebenenfalls ist es von Vorteil, den Regler im Verlauf der Polymerisation über einen längeren Zeitraum, beispielsweise parallel zur Zugabe der Monomere M, zuzugeben. Die Zugabe kann dann mit kontinuierlicher Zulaufrate oder zunehmender oder abnehmender Zulaufrate erfolgen.

Das erfindungsgemäße Verfahren wird als Zulaufverfahren durchgeführt, d. h. wenigstens 95 % der zu polymerisierenden Monomere M werden im Verlauf der Polymerisation unter Polymerisationsbedingungen in den Polymerisationsreaktor gegeben. Die Zugabe kann kontinuierlich oder stufenweise erfolgen. Im Verlauf der Polymerisation kann die Monomerzusammensetzung einmal, mehrfach oder auch kontinuierlich geändert werden (Gradientenfahrweise).

Bevorzugt geht man im erfindungsgemäßen Verfahren so vor, dass man das erste Saatpolymer 1 in Form einer wässrigen Dispersion, gegebenenfalls zusammen mit Wasser vorlegt, auf Polymerisationstemperatur erhitzt und anschließend eine Teilmenge des Polymerisationsinitiators, z. B. 1 bis 20 Gew.-% und insbesondere 5 bis 15 Gew.-%, bezogen auf die Gesamtmenge des Initiators zugibt. Man kann auch so vorgehen, dass man zunächst die Teilmenge des Polymerisationsinitiators zugibt und anschließend auf Polymerisationstemperatur erhitzt. Vorzugsweise erhält zu diesem Zeitpunkt der Polymerisationsreaktor weniger als 1 Gew.-% der zu polymerisierenden Monomere M. Anschließend erfolgt die Zugabe der zu polymerisierenden Monomere in den Polymerisationsreaktor unter Polymerisationsbedingungen. Die Zugabe erfolgt üblicherweise über einen längeren Zeitraum von wenigstens 30 Minuten, z. B. 30 Minuten bis 10 h, insbesondere über einen Zeitraum von 1 h bis 6 h. Wie bereits erläutert, kann die Zugabe mit konstanter, zunehmender oder abnehmender Zugaberate erfolgen. Gemäß einer ersten bevorzugten Ausführungsform erfolgt die Zugabe zu Beginn der Polymerisation mit zunehmender Zulaufrate. Gemäß einer anderen, ebenfalls bevorzugten Ausführungsform des erfindungsgemäßen Verfahrens erfolgt die Zugabe mit konstanter Zugaberate. Die Monomere können als solche zugegeben werden. Vorzugsweise erfolgt die Zugabe der Monomere in Form einer wässrigen Monomeremulsion, die typischerweise wenigstens einen Teil, vorzugsweise wenigstens 70 Gew.-% der in der Emulsionspolymerisation eingesetzten oberflächenaktiven Substanzen enthält. Typischerweise weist diese Monomeremulsion einen Monomergehalt im Bereich von 60 bis 85 Gew.-% und insbesondere im Bereich von 65 bis 80 Gew.-% auf. Es ist prinzipiell möglich, die Monomere bzw. die Monomeremulsion über mehrere Zuläufe in den Polymerisationsreaktor zu geben, wobei die Monomerzusammensetzung der einzelnen Zuläufe voneinander verschieden sein kann. In der Regel reicht es jedoch aus, die Monomere als Mischung über einen Zulauf in den Polymerisationsreaktor zu geben. Sofern die Monomere in Form einer wässrigen Emulsion in den Polymerisationsreaktor gegeben werden, kann es von Vorteil sein, die Monomere unmittelbar vor ihrer Zugabe und nach Maßgabe ihrer Zugabe in dem Polymerisationsreaktor frisch zu emulgieren, beispielsweise nach einem kontinuierlichen Verfahren. Man kann auch die Monomeremulsion zunächst herstellen und anschließend mit der gewünschten Zugaberate in den Polymerisationsreaktor einbringen.

Üblicherweise erfolgt parallel zur Monomerzugabe die Zugabe wenigstens einer Teilmenge oder der Gesamtmenge des Polymerisationsinitiators. Typischerweise wird man wenigstens 80 % des für die Emulsionspolymerisation benötigten Polymerisationsinitiators, insbesondere 85 bis 95 % des Polymerisationsinitiators im Verlauf der Polymerisationsreaktion in den Polymerisationsreaktor geben. Die Zugabe des Polymerisationsinitiators kann mit konstanter Zugaberate oder mit einer sich ändernden, z. B. einer abnehmenden oder zunehmenden Zugaberate erfolgen.

Polymerisationstemperatur und Polymerisationsdruck sind von untergeordneter Bedeutung. Die Emulsionspolymerisation erfolgt typischerweise bei Temperaturen im Bereich von 30 bis 130, vorzugsweise 50 bis 90 °C. Der Polymerisationsdruck liegt üblicherweise im Bereich des Normaldrucks, d. h. bei Umgebungsdruck, kann aber auch leicht darüber oder darunter liegen, z. B. im Bereich von 800 bis 1500 mbar.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet.

In der Regel empfiehlt es sich, nach Beendigung der eigentlichen Polymerisationsreaktion, d. h. nach Beendigung der Zugabe der zu polymerisierenden Monomere bzw. nach einem Umsatz der im Polymerisationsreaktor befindlichen Monomere von mindestens 95 %, eine chemische und/oder physikalische Desodorierung zur Entfernung nicht polymerisierter Monomere durchzuführen. In der Regel wird man wenigstens eine chemische Desodorierung durchführen. Unter einer chemischen Desodorierung versteht man eine Nachpolymerisationsphase, die durch Zugabe wenigstens eines weiteren Polymerisationsinitiators, insbesondere durch eines der vorgenannten Redoxinitiatorsysteme ausgelöst wird. Verfahren hierzu sind bekannt, beispielsweise aus DE-A-4435422, DE-A-4435423 sowie DE-A-4419518. Die Absenkung der Restmonomere kann auch durch kombinierte Maßnahmen einer chemischen und physikalischen Desodorierung erfolgen, wobei vorzugsweise die physikalische Desodorierung im Anschluss an die chemische Desodorierung durchgeführt wird. Die so erhaltenen Polymerdispersionen enthalten vorzugweise weniger als 1500 ppm, insbesondere weniger als 1000 ppm und besonders bevorzugt weniger als 500 ppm flüchtige organische Anteile TVOC. Unter TVOC (Total Volatile Organic Compounds) werden alle organischen Verbindungen mit einem Siedepunkt von maximal 250°C bei 1 bar verstanden. Die Bestimmung des restflüchtigen Gehalts erfolgt typischerweise nach DIN 55649.

Vor ihrer Verwendung wird üblicherweise der pH-Wert der Polymerdispersion auf einen Wert pH > 4,5, insbesondere einem pH im Bereich von 5 bis 8 eingestellt. Die Einstellung des pH-Wertes erfolgt typischerweise durch Zugabe einer Base wie Ammoniak oder einem Alkalimetallhydroxid, vorzugsweise in Form einer wässrigen Lösung. Bevorzugte Base ist Ammoniak.

Es hat sich weiterhin als vorteilhaft erwiesen, wenn man die wässrige Polymerdispersion nach ihrer Herstellung durch Zugabe einer anionischen oberflächenaktiven Substanz stabilisiert. Hierfür bevorzugt sind die Dialkylester der Sulfobernsteinsäure bzw. ihrer Salze, insbesondere der Natriumsalze, insbesondere die Dialkylester der Sulfobernsteinsäure mit 6 bis 12 C-Atomen je Alkylrest. Typischerweise versetzt man die wässrige Polymerdispersion im Anschluss an die Emulsionspolymerisation mit 0,05 bis 2 Gew.-% und insbesondere mit 0,1 bis 1 Gew.-% einer derartigen anionischen oberflächenaktiven Substanz.

In der Regel wird man die wässrige Polymerdispersion außerdem mit einem Biozid stabilisieren.

Die erfindungsgemäßen wässrigen Polymerdispersionen eignen sich in besonderer Weise als Klebstoffkomponente in Haftklebstoffen. Dementsprechend betrifft ein weiterer Gegenstand der vorliegenden Erfindung die Verwendung der hier beschriebenen wässrigen Polymerdispersionen in Haftklebstoffzusammensetzungen.

Die Haftklebstoffzusammensetzung kann aus der wässrigen Polymerdispersion alleine bestehen. Die Haftklebstoffzusammensetzung kann jedoch neben der wässrigen Polymerdispersion auch weitere Zusatzstoffe enthalten, wie sie in Haftklebstoffen auf Basis wässriger Polymerdispersionen üblich sind. Hierzu zählen Füllstoffe, Farbstoffe, Verlaufsmittel, Verdicker, Biozide sowie Tackifier (klebrig machende Harze).

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten. Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des Weiteren finden als Tackifier auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, $\alpha$-Methylstyrol, Vinyltoluol Verwendung. Als Tackifier können auch Polyacrylate, welche ein geringes Molgewicht aufweisen, verwendet werden. Vorzugsweise haben diese Polyacrylate ein gewichtsmittleres Molekulargewicht $M_w$ unter 30 000. Die Polyacrylate bestehen bevorzugt zu mindestens 60, insbesondere mindestens 80 Gew.-% aus $C_1$-$C_8$ Alkyl(meth)-acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Gewichtsmenge der Tackifier beträgt vorzugsweise 0 bis 100 Gew.-Teile, besonders bevorzugt 0 bis 50 Gew.-Teile, bezogen auf 100 Gew.-Teile Polymer (fest/fest).

Die erfindungsgemäßen Polymerdispersionen und Haftklebstoffzusammensetzungen eignen sich grundsätzlich für die Herstellung von Haftklebstoffbeschichtungen auf beliebigen Substraten wie Papier, Kunststofffolien, insbesondere transparente Kunststofffolien, und Metall oder metallisierte Kunststofffolien oder metallisiertes Papier. Beispiele für Kunststofffolien sind Folien aus Polyethylen, Polypropylen, das biaxial oder monoaxial verstreckt sein kann, Polyethylenterephthalat, Polyvinylchlorid, Polystyrol, Polyamid, Polyvinylacetat sowie Laminatfolien, beispielsweise Polyethylen/Polyethylenterephthalat, Polyethylen/Polyvinylacetat, Polyethylen/Polyvinylalkohol.

Die Stärke der Haftklebstoffbeschichtung hängt vom gewünschten Anwendungszweck ab und liegt typischerweise im Bereich von 1 bis 500 μm, insbesondere im Bereich von 2 bis 250 μm oder 5 bis 200 μm, entsprechend einer Beschichtung von 1 bis 500 g/$m^2$, insbesondere 2 bis 250 g/$m^2$ und speziell 5 bis 200 g/$m^2$.

Die Polymerdispersionen bzw. Haftklebstoffe können mittels üblicher Methoden, z. B. durch Rollen, Rakeln, Streichen, Gießen etc. auf die zu beschichteten Substrate aufgebracht werden. Es ist auch möglich die Polymerdispersionen bzw. Haftklebstoffe zunächst auch auf eine Release-Folie, z. B. ein Release-Papier, aufzubringen und mit diesem die Haftklebstoffschicht auf das gewünschte Substrat zu übertragen. Das in den Zusammensetzungen enthaltene Wasser kann in üblicher Weise entfernt werden, z. B. durch Trocknen bei Temperaturen im Bereich von 20 bis 150 °C, insbesondere im Bereich von 50 bis 150 °C.

Aufgrund ihrer geringen Neigung zum Weißanlaufen eignen sie sich insbesondere zur Herstellung von Haftklebstoffbeschichtungen auf transparenten Kunststofffolien, insbesondere für transparente Kunststoffetiketten, die einseitig oder beidseitig bedruckt sein können.

Die folgenden Beispiele und Abbildungen dienen der Veranschaulichung der Erfindung.

Abbildung 1: Teilchengrößenverteilung der Polymerdispersion gemäß Vergleichsbeispiel 1 (Massenverteilung w (d)).

Abbildung 2: Teilchengrößenverteilung w(d) der Polymerdispersion gemäß Vergleichsbeispiel 3.

Abbildung 3: Teilchengrößenverteilung w(d) der Polymerdispersion gemäß Beispiel 1.

Abbildung 4: Teilchengrößenverteilung w(d) der Polymerdispersion gemäß Beispiel 3.

A Herstellung und Charakterisierung der Polymerdispersionen

Bestimmung der Teilchengrößen: Die Bestimmung der Teilchengröße erfolgte nach dem von H. Cölfen, "Analytical Ultracentrifugation of Nanoparticles" in Encyclopedia of Nanoscience and Nanotechnology, (American Scientific Publishers, 2004), S. 67-88 beschriebenen Verfahren bei 23°C an einer 0,1-0,5 gew.-%igen Verdünnung (bez. auf Feststoffgehalt, Lichtdurchlässigkeit etwa 10 %) der Polymerdispersion mittels Ultrazentrifuge (Typ Beckmann Model XL) in einer Sedimentationsfeldrampe von 600 bis 40000 U/min entsprechend einer Beschleunigung von 2250 bis 150000 g unter Verwendung einer Trübungsoptik (siehe auch W. Mächtle und L. Börger in "Analytical Ultracentrifugation of Polymers and Nanoparticles", (Springer, Berlin, 2006); W. Mächtle in Analytical Ultracentrifugation in Biochemistry and Polymer Science, S.E. Härting et al. (Herausgeber), Cambridge, Royal Society of Chemistry, 1992, S. 147-175; bzw. in W. Mächtle, Makromolekulare Chemie 185 (1984), Seite 1025 - 1039). Als Verdünnungsmittel diente $D_20$ mit 0,5 g/l Emulgator K30 (Natriumsalz eine Alkansulfonats).

Bestimmung der Viskosität: Die Bestimmung der Viskosität nach Brookfield erfolgte in Anlehnung an DIN EN ISO 3219 mittels eines Rotationsviskosimeters (Rheometer Physica MCR 301 mit Probenwechsler und Meßsystem CC27 der Fa. Anton Paar) bei 23° und einem Schergefälle von 0 bis 500 $sec^{-1}$). Angegeben ist der Wert bei 100 $sec^{-1}$.

Die Bestimmung der Glasübergangstemperatur erfolgte mittels DSC nach der in ASTM 3418/82 beschriebenen Methode mittels DSC unter Ermittlung der sog. Midpoint Temperature.

Lichtdurchlässigkeit (LD-Wert): Die Bestimmung des LD-Wertes erfolgte Photometrisch mit einem Photometer an 0,01 gew.-%igen Verdünnung der Dispersion bei 23°C.

Einsatzstoffe:

Emulgatorlösung 1: 58 gew.-%ige handelsübliche Lösung des Natriumsalzes eines Schwefelsäurehalbesters eines $C_{12}$-$C_{14}$-Alkanolethoxylats (30 EO).

Emulgatorlösung 2: Dowfax® 2A1: 45 gew.-%ige Lösung des Natriumsalzes einer Mischung aus Mono- und Di-$C_{12}$-alkyl-bishydroxysulfonyldiphenylether.

Emulgatorlösung 3: 58 gew.-%ige Lösung des Natriumsalzes von Di-2-ethylhexylsulfosuccinat.

Saatdispersion 1: Wässrige Polymerdispersion eines Styrolpolymers mit einem Feststoffgehalt von 33 Gew.-% und einer mittleren Polymerteilchengröße (Gewichtsmittel, $d_{50}$) von 30 nm.

Saatdispersion 2: Wässrige Polymerdispersion eines Acrylatpolymers (65 Gew.-% Butylacrylat, 34 Gew.-% Methylmethacrylat, 1 Gew.-% Acrylsäure) mit einem Feststoffgehalt von 41 Gew.-% und einer mittleren Polymerteilchengröße (Gewichtsmittel, $d_{50}$) von 50 nm.

1. Vergleichsbeispiel 1

In einem Polymerisationsreaktor legte man 0,75 g Ascorbinsäure in 206 g entionisiertem Wasser vor. Die

Mischung wurde auf 90°C erhitzt. Hierzu gab man 9,62 g einer 7 gew.-%igen wässrigen Lösung von Natriumperoxodisulfat und begann nach weiteren 5 Minuten bei 90 °C mit der Zugabe der Zuläufe 1 und 2. Zulauf 1 wurde in der folgenden Weise zudosiert:

0,4 % innerhalb 6 Minuten
3,8 % innerhalb 22 Minuten
7,6 % innerhalb 22 Minuten
11,4 % innerhalb 22 Minuten
76,8 % innerhalb 2 Stunden, 18 Minuten

Zulauf 2 wurde innerhalb 3 Stunden 30 Minuten zudosiert. Während der Zugabe wurde die Temperatur im Reaktionsgemisch bei 90°C gehalten. Nach Beendigung von Zulauf 1 gab man weitere 40 g entionisiertes Wasser zu. Anschließend neutralisierte man sukzessive mit 15 g einer 10 gew.-%igen wässrigen Natronlauge und 7,5 g einer 10%igen wässrigen Ammoniak-Lösung. Man gab weitere 10 g entionisiertes Wasser zu und dosierte dann bei 90°C innerhalb einer Stunde die Zuläufe 3 und 4 zu. Dann gab man 12,9 g wässrige Emulgatorlösung 3 und 30 g entionisiertes Wasser zu, rührte weitere 15 Minuten bei 90°C und ließ dann auf Raumtemperatur abkühlen.

Die erhaltene Polymerdispersion hatte einen Feststoffgehalt von 64,2 Gew.-%, einen pH-Wert von 5 und einen LD-Wert (0,01 gew.-%ig) von 37 %. Die Glasübergangstemperatur lag bei -42°C. Die Viskosität lag bei 620 mPa.s.

Die Teilchengrößenverteilung ist in Figur 1 dargestellt. Die Werte $d_{10}$, $d_{50}$ und $d_{90}$ sind in Tabelle 1 angegeben.

Zulauf 1: 1920 g einer wässrigen Emulsion von 15 g Acrylsäure, 29,7 g 2-Hydroxypropylacrylat, 29,4 g Styrol, 118,8 g Methylacrylat, 120,3 g Methylmethacrylat und 1186 g 2-Ethylhexylacrylat in entionisiertem Wasser, enthaltend 70,3 g Emulgatorlösung 1, 6,7 g Emulgatorlösung 2 und 10,3 g Emulgatorlösung 3.
Zulauf 2: 77,14 g einer 7 gew.-%igen, wässrigen Natriumperoxodisulfat-Lösung.
Zulauf 3: 22,5 g einer 10 gew.-%igen wässrigen Lösung von tert.-Butylhydroperoxid.
Zulauf 4: 18 g einer 10 gew.%igen wässrigen Lösung von Natriumhydroxymethylsulfinat.

2. Vergleichsbeispiel 2

In einem Polymerisationsreaktor legte man 0,7 g Ascorbinsäure In 192 g entionisiertem Wasser vor. Die Mischung wurde auf 90°C erhitzt. Hierzu gab man 8,98 g einer 7 gew.-%igen wässrigen Lösung von Natriumperoxodisulfat und begann nach weiteren 5 Minuten bei 90°C mit der Zugabe der Zuläufe 1 und 2 in der für Vergleichsbeispiel 1 beschriebenen Weise. Während der Zugabe wurde die Temperatur im Reaktionsgemisch bei 90°C gehalten. 84 min. nach Start der Zuläufe 1 bzw. 2 gab man in einer Portion 9,76 g Saatdispersion 1 zu. Nach Beendigung der Zuläufe 1 und 2 gab man weitere 37,5 g entionisiertes Wasser zu. Anschließend neutralisierte man sukzessive mit 14 g einer 10 gew.%igen wässrigen Natronlauge und 7 g einer 10 gew.-%igen wässrigen Ammoniak-Lösung. Man gab weitere 9,5 g entionisiertes Wasser zu und dosierte dann bei 90°C innerhalb einer Stunde die Zuläufe 3 und 4 zu. Dann gab man 12,1 g wässrige Emulgatorlösung 3 und 28 g entionisiertes Wasser zu, rührte weitere 15 Minuten bei 90°C und ließ dann auf Raumtemperatur abkühlen.

Die Werte $d_{10}$, $d_{50}$ und $d_{90}$ sind in Tabelle 1 angegeben.

Zulauf 1: 1980 g einer wässrigen Emulsion von 14 g Acrylsäure, 27,7 g 2-Hydroxypropylacrylat, 27,4 g Styrol, 110,9 g Methylacrylat, 112,3 g Methylmethacrylat und 1107,7 g 2-Ethylhexylacrylat in entionisiertem Wasser, enthaltend 65,6 g Emulgatorlösung 1, 6,2 g Emulgatorlösung 2 und 9,7 g Emulgatorlösung 3.
Zulauf 2: 72 g einer 7 gew.-%igen, wässrigen Natriumperoxodisulfat-Lösung.
Zulauf 3: 21 g einer 10 gew.-%igen wässrigen Lösung von tert.-Butylhydroperoxid.
Zulauf 4: 16,8 g einer 10 gew.-%igen wässrigen Lösung von Natrium-hydroxymethylsulfinat.

Die erhaltene Polymerdispersion hatte einen Feststoffgehalt von 60,4 Gew.-%, einen pH-Wert von 5 und einen LD-Wert (0,01 gew.-%ig) von 41 %. Die Glasübergangstemperatur lag bei -42°C. Die Viskosität lag bei 190 mPa.s. Die Werte $d_{10}$, $d_{50}$ und $d_{90}$ sind in Tabelle 1 angegeben.

3. Beispiel 1

In einem Polymerisationsreaktor legte man 15.2 g Saatdispersion 2 in 188,3 g entionisiertem Wasser vor. Die Mischung wurde auf 90°C erhitzt. Hierzu gab man 8 g einer 7 gew.-%igen wässrigen Lösung von Natriumperoxodisulfat

und begann nach weiteren 4 Minuten bei 90°C mit der Zugabe der Zuläufe 1 und 2, die man mit konstanter Zulaufrate innerhalb von 4 h zudosierte. Während der Zugabe wurde die Temperatur im Reaktionsgemisch bei 90°C gehalten. 72 min. nach Start der Zuläufe 1 bzw. 2 gab man in einer Portion 8,71 g Saatdispersion 1 zu. Nach Beendigung der Zuläufe 1 und 2 gab man weitere 40 g entionisiertes Wasser zu. Anschließend neutralisierte man mit 16,3 g einer 10 gew.%igen wässrigen Ammoniak-Lösung. Man gab weitere 10 g entionisiertes Wasser zu und dosierte dann bei 90°C innerhalb einer Stunde die Zuläufe 3 und 4 zu. Dann gab man 10,8 g wässrige Emulgatorlösung 3 und 30 g entionisiertes Wasser zu, rührte weitere 15 Minuten bei 90°C und ließ dann auf Raumtemperatur abkühlen.

Die erhaltene Polymerdispersion hatte einen Feststoffgehalt von 59,1 Gew.-%, einen pH-Wert von 6 und einen LD-Wert (0,01 gew.-%ig) von 52 %. Die Glasübergangstemperatur lag bei -42°C. Die Viskosität lag bei 450 mPa.s.

Die Teilchengrößenverteilung ist in Figur 3 dargestellt. Die Werte $d_{10}$, $d_{50}$ und $d_{90}$ sind in Tabelle 1 angegeben.

Zulauf 1: 1737,3 g einer wässrigen Emulsion von 12,5 g Acrylsäure, 24,7 g 2-Hydroxypropylacrylat, 24,5 g Styrol, 99 g Methylacrylat, 100,3 g Me-thylmethacrylat und 989 g 2-Ethylhexylacrylat in entionisiertem Was-ser, enthaltend 58,6 g Emulgatorlösung 1, 5,6 g Emulgatorlösung 2 und 8,6 g Emulgatorlösung 3.

Zulauf 2: 64,3 g einer 7 gew.-%igen, wässrigen Natriumperoxodisulfat-Lösung.

Zulauf 3: 18,8 g einer 10 gew.-%igen wässrigen Lösung von tert.-Butylhydroperoxid.

Zulauf 4: 15 g einer 10 gew.-%igen wässrigen Lösung von Natrium-hydroxymethylsulfinat.

4. Beispiel 2

Die Herstellung erfolgte analog Beispiel 1, mit dem Unterschied, dass die Vorlage zusätzlich 1,5 g Ascorbinsäure enthielt.

Die erhaltene Polymerdispersion hatte einen Feststoffgehalt von 58,7 Gew.-%, einen pH-Wert von 6 und einen LD-Wert (0,01 gew.-%ig) von 46 %. Die Glasübergangstemperatur lag bei -42°C. Die Viskosität lag bei 350 mPa.s. Die Werte $d_{10}$, $d_{50}$ und $d_{90}$ sind in Tabelle 1 angegeben.

5. Beispiel 3

Die Herstellung erfolgte analog Beispiel 1, mit dem Unterschied, dass die Saatdispersion über einen Zeitraum von 192 min., beginnend 24 min. nach Start von Zulauf 1 zugegeben wurde. Zur Neutralisation wurden anstelle von 16,3 g der 10 gew.-%igen wässrigen Ammoniak-Lösung sukzessive 12.5 g 10 gew.-%ige Natronlauge und 7,25 g einer 10 gew.-%igen wässrigen Ammoniak-Lösung zugegeben.

Die erhaltene Polymerdispersion hatte einen Feststoffgehalt von 59,4 Gew.-%, einen pH-Wert von 5,5 und einen LD-Wert (0,01 gew.-%ig) von 49 %. Die Glasübergangstemperatur lag bei -42°C. Die Viskosität lag bei 380 mPa.s.

Die Teilchengrößenverteilung ist in Figur 4 dargestellt. Die Werte $d_{10}$, $d_{50}$ und $d_{90}$ sind in Tabelle 1 angegeben.

6. Beispiel 4

In einem Polymerisationsreaktor legte man 13,7 g Saatdispersion 2 in 188 g entionisiertem Wasser vor. Die Mischung wurde auf 85°C erhitzt. Hierzu gab man 8.02 g einer 7 gew.-%igen wässrigen Lösung von Natriumperoxodisulfat und begann nach weiteren 4 Minuten bei 85°C mit der Zugabe der Zuläufe 1 und 2, die man mit konstanter Zulaufrate innerhalb von 4 h zudosierte. Während der Zugabe wurde die Temperatur im Reaktionsgemisch bei 85°C gehalten. 90 min. nach Start der Zuläufe 1 bzw. 2 gab man in einer Portion 24,4 g Saatdispersion 1 zu. Nach Beendigung der Zuläufe 1 und 2 gab man weitere 40 g entionisiertes Wasser zu. Anschließend neutralisierte man mit 16,3 g einer 10 gew.-%igen wässrigen Ammoniak-Lösung. Man gab weitere 10 g entionisiertes Wasser zu und dosierte dann bei 85°C innerhalb einer Stunde die Zuläufe 3 und 4 zu. Dann gab man 10,8 g wässrige Emulgatorlösung 3 und 27,6 g entionisiertes Wasser zu, rührte weitere 15 Minuten bei 85°C und ließ dann auf Raumtemperatur abkühlen. Die erhaltene Polymerdispersion hatte einen Feststoffgehalt von 55,9 Gew.-%, einen pH-Wert von 6,2 und einen LD-Wert (0,01 gew.-%ig) von 59 %. Die Glasübergangstemperatur lag bei -42°C. Die Viskosität lag bei 180 mPa.s.

Die Werte $d_{10}$, $d_{50}$ und $d_{90}$ sind in Tabelle 1 angegeben.

Zulauf 1: 1894,9 g einer wässrigen Emulsion von 12,5 g Acrylsäure, 24,7 g 2-Hydroxypropylacrylat, 24,5 g Styrol, 99 g Methylacrylat, 100,3 g Me-thylmethacrylat und 989 g 2-Ethythexylacrylat in entionisiertem Was-ser, enthaltend 58,6 g Emulgatorlösung 1, 5,6 g Emulgatorlösung 2 und 8,6 g Emulgatorlösung 3.

Zulauf 2: 64,3 g einer 7 gew.-%igen, wässrigen Natriumperoxodisulfat-Lösung.

Zulauf 3: 18,8 g einer 10 gew.-%igen wässrigen Lösung von tert.-Butylhydroperoxid.

(fortgesetzt)

Zulauf 4: 15 g einer 10 gew.-%igen wässrigen Lösung von Natrium-hydroxymethylsulfinat.

7. Beispiel 5

Die Herstellung erfolgte analog Beispiel 4, mit dem Unterschied, dass man 9,15 g Saatdispersion 2 vodegte und anstelle der Zugabe von 24,4 g Saatdispersion 1 40 min. nach Start von Zulauf 130,5 g Saatdispersion zugegeben wurden.

Die erhaltene Polymerdispersion hatte einen Feststoffgehalt von 55,6 Gew.-%, einen pH-Wert von 6,1 und einen LD-Wert (0,01 gew.-%ig) von 69 %. Die Glasübergangstemperatur lag bei -42°C. Die Viskosität lag bei 170 mPa.s.

Die Werte $d_{10}$, $d_{50}$ und $d_{90}$ sind in Tabelle 1 angegeben.

8. Vergleichsbeispiel 3

Handelsübliche wässrige Hafikdebstoffdispersion eines Polymeren mit der für Vergleichsbeispiel 1 angegebenen Monomerzusammensetzung. Die Polymerdispersion hatte einen Feststoffgehalt von 61,1 Gew.-%, einen pH-Wert >5. Die Glasübergangstemperatur lag bei -42°C. Die Viskosität lag bei 510 mPa.s. Die Teilchengroßenverteilung ist in Figur 2 dargestellt. Die Werte $d_{10}$, $d_{50}$ und $d_{90}$ sind in Tabelle 1 angegeben.

9. Vergleichsbeispiel 4

Handelsübliche wässrige Haftklebstoffdispersion eines Polymeren mit der für Vergleichsbeispiel 1 angegebenen Monomerzusammensetzung. Die Polymerdispersion hatte einen Feststoffgehalt von 60,9 Gew.-%, einen pH-Wert >5. Die Glasübergangstemperatur lag bei -42°C. Die Viskosität lag bei 550 mPa.s. Die Werte $d_{10}$, $d_{50}$ und $d_{90}$ sind in Tabelle 1 angegeben.

Tabelle 1: Teilchengrößenverteilung

| Beispiel | $d_{10}$ | $d_{50}$ | $d_{90}$ | Q |
|---|---|---|---|---|
| V1 | 111 | 317 | 723 | 1,92 |
| V2 | 126 | 258 | 626 | 1,93 |
| 1 | 101 | 299 | 318 | 0,72 |
| 2 | 115 | 316 | 334 | 0,69 |
| 3 | 102 | 312 | 333 | 0,73 |
| 4 | 73 | 209 | 228 | 0,74 |
| 5 | 87 | 95 | 208 | 1,28 |
| V3 | 101 | 376 | 407 | 0,81 |
| V4 | 49,3 | 342 | 363 | 0,91 |
| V = Vergleichsbeispiel | | | | |

Anwendungstechnische Prüfung

1. Herstellung der Prüfstreifen

Die zu prüfende Dispersion wird mit einer Rakel in dünner Schicht auf ein silikonisiertes Papier aufgetragen und 3 min. bei 90 °C getrocknet. Die Spalthöhe der Rakel wird dabei so gewählt, dass sich für den getrockneten Klebstoff eine Auftragsmenge von 19-21 g/m$^2$ ergibt. Auf den getrockneten Klebstoff wird eine handelsübliche PE-Folie (100 μm, Corona vorbehandelt) aufgelegt und mit einem Handroller fest angerollt. Das so hergestellte Folienlaminat wird in Streifen von 2,5 cm Breite geschnitten. Diese Streifen werden vor der Prüfung mindestens 24h im Normklima gelagert.

2. Bestimmung des Weißanlaufverhaltens

Die Bestimmung des Weißanlaufvertialtens bei Einwirkung von Feuchtigkeit wurde nach der folgenden Methode bestimmt.

Streifen der beschichteten Folie mit einer Breite von 25 mm wurden in ein Wasserbad getaucht und die Zeit für eine Veränderung des optischen Erscheinungsbildes bestimmt. Die Trübung der Streifen wurde visuell bewertet nach 30 sec.,

60 sec., 5 min. 10 min., 20 min., 30 min. und 60 min. Die Bewertung erfolgte nach einer Notenskala von 0 bis 4. Hierbei bedeutet:
0 keine erkennbare Trübung
1 sehr schwache Trübung
2 deutlich erkennbare Trübung
3 starke Trübung
4 sehr starke Trübung

Die Ergebnisse sind in der folgenden Tabelle zusammengestellt:

Tabelle 2: Weißanlaufverhalten

| | Beispiel | | | | | | | | |
|---|---|---|---|---|---|---|---|---|---|
| Zeit [min] | 1 | 2 | V1 | 3 | V2 | 4 | 5 | V3 | V4 |
| 0,5 | 0 | 0 | 0-1 | 0 | 0-1 | 0 | 0 | 0-1 | 0-1 |
| 1 | 0 | 0 | 1 | 0 | 1 | 0 | 0 | 1 | 1 |
| 5 | 0-1 | 1 | 2 | 0-1 | 1-2 | 0-1 | 0 | 2 | 2 |
| 10 | 1 | 1-2 | 2-3 | 1 | 2 | 0-1 | 0 | 3 | 2-3 |
| 20 | 1 | 2 | 3 | 1 | 2-3 | 0-1 | 0 | 3 | 3 |
| 30 | 1-2 | 2 | 4 | 1-2 | 3-4 | 1 | 0 | 4 | 4 |
| 60 | 2 | 2-3 | 4 | 2 | 4 | 1 | 0-1 | 4 | 4 |

3. Prüfung der Schälfestigkeit als Maß für die Adhäsion (in Anlehnung an FINAT FTM1)

Nach Abziehen des silikonisierten Papiers wird der 2,5 cm breite Folien-Prüfstreifen mit dem zu prüfenden Substrat verklebt. Umgebungsbedingungen: 23 C, 50% relative Luftfeuchtigkeit. 1 Minute nach der Verklebung (Substrat Polyethylen) bzw. 24 Stunden nach der Verklebung (Substrat Polyethylen oder Glas) wird der Streifen mit Hilfe einer Zugprüfmaschine in einem Winkel von 180° mit einer Geschwindigkeit von 300 mm/ min abgezogen. Als Schälfestigkeit wird die dafür im Mittel erforderliche Kraft in N/2,5 cm als Mittelwert aus den Ergebnissen von drei Prüfungen angegeben.

Tabelle 3: Schälfestigkeit [N/2,5 cm]

| Beispiel | PE | | | | Glas | |
|---|---|---|---|---|---|---|
| | Sofort | Bruchbild | 24 h | Bruchbild | 24 h | Bruchbild |
| 1 | 3,6 | A | 5,7 | A | 13,1 | A/K |
| 2 | 3,4 | A | 3,8 | A | 9,9 | A |
| V1 | 3,2 | A | 3,5 | A | 10,1 | A |
| 3 | 3,6 | A | 4,9 | A | 13,8 | Au. K |
| V2 | 4,2 | A | 5,7 | A | 12,6 | A |
| 4 | 3,4 | A | 3,8 | A | 10,1 | A |
| 5 | 4,5 | A | 4,2 | A | 11,6 | A |

(fortgesetzt)

| Beispiel | PE | | | | Glas | |
|---|---|---|---|---|---|---|
| | Sofort | Bruchbild | 24 h | Bruchbild | 24 h | Bruchbild |
| V4 | 2,3 | A | 3,5 | A | 16,3 | K |
| A = Adhäsionsbruch<br>K = Kohäsionsbruch | | | | | | |

4. Prüfung der Oberflächenklebrigkeit (Loop Tack in Anlehnung an FINAT FTM9)

Die Untersuchung erfolgt bei Umgebungsbedingungen: 23 C, 50% relative Luftfeuchtigkeit. Das Trennpapier wird vom Prüfstreifen abgezogen. Die beiden Enden des Prüfstreifens werden auf ca. 1 cm Länge mit der Klebeseite nach innen umgeklappt. Nun wird aus dem Prüfstreifen eine Schlaufe mit der Klebseite nach außen gebildet, die beiden Enden zusammengefasst und in die obere Klemme einer Zugprüfmaschine eingespannt. In die untere Klemme wird das Prüfsubstrat eingespannt. Die Klebestreifenschlaufe wird mit einer Geschwindigkeit von 300 mm/Minute in einem Winkel von 90° in Richtung der Oberfläche des zu prüfenden Substrats bewegt, dass die Klebseite des Prüfstreifens mit dem Substrat ohne zusätzlichen Druck verklebt. Die Zugprüfmaschine wird gestoppt und sofort wieder mit derselben Geschwindigkeit nach oben gefahren, wenn sich die Unterkante der oberen Klemme 40 mm über dem Substrat befindet.

Als Loop Tack wird die dafür im Mittel erforderliche Kraft in N/2,5 cm als Mittelwert aus den Ergebnissen von drei Prüfungen angegeben.

Tabelle 4: Loop Tack

| Beispiel | Glas | | PE | |
|---|---|---|---|---|
| | [N/2,5 cm] | Bruchbild | [N/2,5 cm] | Bruchbild |
| 1 | 10,4 | A | 6,6 | A |
| 2 | 10,2 | A | 6,0 | A |
| V1 | 11,7 | A | 6,1 | A |
| 3 | 14,2 | A | 6,6 | A |
| V2 | 12,6 | A | 6,5 | A |
| 4 | 10,1 | A | 6,0 | A |
| 5 | 11,6 | A | 6,3 | A |
| V4 | 9,6 | A | 5,0 | A |

**Patentansprüche**

1. Wässrige Polymerdispersion mit einem Polymergehalt von wenigstens 55 Gew.-%, bezogen auf das Gesamtgewicht der Dispersion, worin das Polymer aus ethylenisch ungesättigten Monomeren M aufgebaut ist und eine Glasübergangstemperatur unterhalb -10°C aufweist und worin die dispergierten Polymerpartikel eine polymodale Teilchengrößenverteilung aufweisen, wobei wenigstens 70 Gew.-% der Polymerpartikel einen Teilchendurchmesser, bestimmt durch Zentrifugieren, unterhalb 350 nm aufweisen.

2. Polymerdispersion nach Anspruch 1, worin die Teilchengrößenverteilung durch einen Polydispersitätsindex Q von wenigstens 0,5 charakterisiert ist:

$$Q = \frac{d_{90} - d_{10}}{d_{50}}$$

worin

$d_{10}$ für den Teilchendurchmesser steht, den 10 Gew.-% der Polymerteilchen unterschreiten
$d_{50}$ für den Teilchendurchmesser steht, den 50 Gew.-% der Polymerteilchen unterschreiten und
$d_{90}$ für den Teilchendurchmesser steht, den 90 Gew.-% der Polymerteilchen unterschreiten,

wobei alle Teilchendurchmesser durch Zentrifugieren bestimmt sind.

**3.** Polymerdispersion nach einem der vorhergehenden Ansprüche, worin weniger als 10 Gew.-% der Polymerpartikel einen Teilchendurchmesser unterhalb 70 nm aufweisen.

**4.** Polymerdispersion nach einem der vorhergehenden Ansprüche, worin 10 bis 60 Gew.-% der Polymerpartikel einen Teilchendurchmesser im Bereich von 70 bis 180 nm aufweisen und 40 bis 90 Gew.-% der der Polymerpartikel einen Teilchendurchmesser im Bereich von 180 bis 350 nm aufweisen.

**5.** Polymerdispersion nach einem der vorhergehenden Ansprüche, worin die Monomere M, bezogen auf die Gesamtmenge der Monomere M, wenigstens 65 Gew.-% $C_2$-$C_{12}$-Alkylacrylate umfassen.

**6.** Polymerdispersion nach Anspruch 5, worin die Monomere M, bezogen auf die Gesamtmenge der Monomere M, 0,1 bis 10 Gew.-% monoethylenisch ungesättigte Monomere mit wenigstens einer Hydroxyalkylgruppe umfassen.

**7.** Polymerdispersion nach einem der vorhergehenden Ansprüche, worin das Polymer zu wenigstens 99 Gew.-% aufgebaut ist aus monoethylenisch ungesättigten Monomeren M, umfassend:

a) 65 bis 99,8 Gew.-% wenigstens eines Monomers a), ausgewählt unter $C_2$-$C_{12}$-Alkylacrylaten;
b) 0,1 bis 30 Gew.-% wenigstens eines Monomers b) ausgewählt unter Methylacrylat, $C_1$-$C_{12}$-Alkylmethacrylaten und vinylaromatischen Monomeren;
c) 0,1 bis 10 Gew.-% wenigstens eines Monomers c) ausgewählt unter monoethylenisch ungesättigten Monomeren mit wenigstens einer Hydroxyalkylgruppe;
d) 0 bis 5 Gew.-% eines oder mehrerer Monomere d), ausgewählt unter monoethylenisch ungesättigten Monomeren mit wenigstens einer Säuregruppe.

**8.** Polymerdispersion nach einem der vorhergehenden Ansprüche mit einer Brookfield-Viskosität, bestimmt nach DIN EN ISO 3219 (bei 20°C, 100 $sec^{-1}$) von nicht mehr als 1,5 Pa.s.

**9.** Verfahren zur Herstellung einer wässrigen Polymerdispersion nach einem der Ansprüche 1 bis 8 umfassend die radikalische wässrige Emulsionspolymerisation der ethylenisch ungesättigten Monomere M, aus denen das Polymer aufgebaut ist, nach einem Monomerzulaufverfahren, wobei man wenigstens 95 % der zu polymerisierenden Monomere unter Polymerisationsbedingungen zu einem im Polymerisationsreaktor befindlichen ersten teilchenförmigen Saatpolymer 1 gibt und wobei man im Verlauf der Polymerisation wenigstens ein weiteres Saatpolymer 2 in Form einer wässrigen Dispersion zugibt.

**10.** Verfahren nach Anspruch 9, wobei die Zugabe des Saatpolymers erfolgt, wenn 10 bis 60 Gew.-% der zu polymerisierenden Monomere im Polymerisationsreaktor befinden.

**11.** Verfahren nach Anspruch 9 oder 10, wobei man das Saatpolymer 1 in einer Menge von 0,1 bis 2 Gew.-%, bezogen auf die zu polymerisierenden Monomere einsetzt.

**12.** Verfahren nach einem der Ansprüche 9 bis 11, wobei das Saatpolymer 1 eine gewichtsmittlere Teilchengröße im Bereich von 10 bis 150 nm aufweist.

**13.** Verfahren nach einem der Ansprüche 9 bis 12, wobei man das Saatpolymer 2 in einer Menge von 0,05 bis 2 Gew.-%, bezogen auf die zu polymerisierenden Monomere einsetzt.

**14.** Verwendung einer wässrigen Polymerdispersion nach einem der Ansprüche 1 bis 8 in Haftklebstoffzusammensetzungen.

**15.** Verwendung nach Anspruch 14 in Haftklebstoffzusammensetzungen für transparente Kunststofffolien, insbesondere für transparente Kunststoffetiketten.

## Claims

1. An aqueous polymer dispersion having a polymer content of at least 55% by weight, based on the total weight of the dispersion, in which the polymer is composed of ethylenically unsaturated monomers M and has a glass transition temperature of below -10°C, and in which the dispersed polymer particles have a polymodal particle size distribution, at least 70% by weight of the polymer particles having a particle diameter, determined by centrifuging, of below 350 nm.

2. The polymer dispersion according to claim 1, in which the particle size distribution is **characterized by** a polydispersity index Q of at least 0.5:

$$Q = \frac{d_{90} - d_{10}}{d_{50}}$$

in which

$d_{10}$ is the particle diameter below which 10% by weight of the polymer particles fall,
$d_{50}$ is the particle diameter below which 50% by weight of the polymer particles fall, and
$d_{90}$ is the particle diameter below which 90% by weight of the polymer particles fall,

all of the particle diameters being determined by centrifuging.

3. The polymer dispersion according to one of the preceding claims, in which less than 10% by weight of the polymer particles have a particle diameter of below 70 nm.

4. The polymer dispersion according to any of the preceding claims, in which 10% to 60% by weight of the polymer particles have a particle diameter in the range from 70 to 180 nm and 40% to 90% by weight of the polymer particles have a particle diameter in the range from 180 to 350 nm.

5. The polymer dispersion according to any of the preceding claims, in which the monomers M, based on the total amount of the monomers M, comprise at least 65% by weight of $C_2$-$C_{12}$ alkyl acrylates.

6. The polymer dispersion according to claim 5, in which the monomers M, based on the total amount of the monomers M, comprise 0.1 % to 10% by weight of monoethylenically unsaturated monomers having at least one hydroxyalkyl group.

7. The polymer dispersion according to any of the preceding claims, in which the polymer is composed to an extent of at least 99% by weight of monoethylenically unsaturated monomers M comprising:

a) 65% to 99.8% by weight of at least one monomer a) selected from $C_2$-$C_{12}$ alkyl acrylates;
b) 0.1 % to 30% by weight of at least one monomer b) selected from methyl acrylate, $C_1$-$C_{12}$ alkyl methacrylates, and vinylaromatic monomers;
c) 0.1 % to 10% by weight of at least one monomer c) selected from monoethylenically unsaturated monomers having at least one hydroxyalkyl group;
d) 0% to 5% by weight of one or more monomers d) selected from monoethylenically unsaturated monomers having at least one acid group.

8. The polymer dispersion according to any of the preceding claims, having a Brookfield viscosity, determined in accordance with DIN EN ISO 3219 (at 20°C, 100 $sec^{-1}$), of not more than 1.5 Pa.s.

9. A process for preparing an aqueous polymer dispersion according to any of claims 1 to 8, comprising the free-radical aqueous emulsion polymerization of the ethylenically unsaturated monomers M of which the polymer is composed by a monomer feed process, at least 95% of the monomers to be polymerized being added under polymerization conditions to a first particulate seed polymer 1 located in the polymerization reactor, and at least one further seed polymer 2 in the form of an aqueous dispersion being added in the course of the polymerization.

10. The process according to claim 9, the seed polymer being added when 10% to 60% by weight of the monomers to be polymerized are located in the polymerization reactor.

11. The process according to claim 9 or 10, the seed polymer 1 being used in an amount of 0.1 % to 2% by weight, based on the monomers to be polymerized.

12. The process according to any of claims 9 to 11, the seed polymer 1 having a weight-average particle size in the range from 10 to 150 nm.

13. The process according to any of claims 9 to 12, the seed polymer 2 being used in an amount of 0.05% to 2% by weight, based on the monomers to be polymerized.

14. The use of an aqueous polymer dispersion according to any of claims 1 to 8 in pressure sensitive adhesive compositions.

15. The use according to claim 14 in pressure sensitive adhesive compositions for transparent plastics sheets, more particular for transparent plastics labels.

## Revendications

1. Dispersion aqueuse de polymère ayant une teneur en polymère d'au moins 55 % en poids, par rapport au poids total de la dispersion, dans laquelle le polymère est constitué de monomères M à insaturation éthylénique et présente une température de transition vitreuse inférieure à -10 °C et dans laquelle les particules de polymère dispersées présentent une distribution granulométrique polymodale, au moins 70 % en poids des particules de polymère ayant un diamètre de particule, déterminé par centrifugation, inférieur à 350 nm.

2. Dispersion de polymère selon la revendication 1, dans laquelle la distribution granulométrique est **caractérisée par** un indice de polydispersité Q d'au moins 0,5 :

$$Q = \frac{d_{90} - d_{10}}{d_{50}}$$

ou

$d_{10}$ représente le diamètre de particule que 10 % en poids des particules de polymère n'atteignent pas
$d_{50}$ représente le diamètre de particule que 50 % en poids des particules de polymère n'atteignent pas
$d_{90}$ représente le diamètre de particule que 90 % en poids des particules de polymère n'atteignent pas,

tous les diamètres de particules étant déterminés par centrifugation.

3. Dispersion de polymère selon l'une quelconque des revendications précédentes, dans laquelle moins de 10 % en poids des particules de polymère ont un diamètre de particule intérieur à 70 nm.

4. Dispersion de polymère selon l'une quelconque des revendications précédentes, dans laquelle 10 à 60 % en poids des particules de polymère ont un diamètre de particule dans la plage de 70 à 180 nm et 40 à 90 % en poids des particules de polymère ont un diamètre de particule dans la plage de 180 à 350 nm.

5. Dispersion de polymère selon l'une quelconque des revendications précédentes, dans laquelle les monomères M comprennent, par rapport à la quantité totale des monomères M, au moins 65 % en poids d'acrylates d'alkyle en $C_2$-$C_{12}$.

6. Dispersion de polymère selon la revendication 5, dans laquelle les monomères M comprennent, par rapport à la quantité totale des monomères M, 0,1 à 10 % en poids de monomères à insaturation monoéthylénique, comportant au moins un groupe hydroxyalkyle.

**7.** Dispersion de polymère selon l'une quelconque des revendications précédentes, dans laquelle le polymère est constitué à raison d'au moins 99 % en poids de monomères M à insaturation monoéthylénique, comprenant :

a) 65 à 99,8 % en poids d'au moins un monomère a), choisi parmi des acrylates d'alkyle en $C_2$-$C_{12}$ :
b) 0,1 à 30 % en poids d'au moins un monomère b) choisi parmi l'acrylate de méthyle, des méthacrylates d'alkyle en $C_1$-$C_{12}$ et des monomères vinylaromatiques ;
c) 0,1 à 10 % en poids d'au moins un monomère c) choisi parmi des monomères à insaturation monoéthylénique comportant au moins un groupe hydroxyalkyle ;
d) 0 à 5 % en poids d'un ou plusieurs monomères d), choisis parmi des monomères à insaturation monoéthylénique comportant au moins un groupe acide.

**8.** Dispersion de polymère selon l'une quelconque des revendications précédentes, ayant une viscosité Brookfield, déterminée selon DIN EN ISO 3219 (à 20 °C, 100 $s^{-1}$) n'excédant pas 1,5 Pa.s.

**9.** Procédé pour la préparation d'une dispersion aqueuse de polymère selon l'une quelconque des revendications 1 à 8, comprenant la polymérisation radicalaire en émulsion aqueuse des monomères M à insaturation éthylénique, à base desquels est constitué le polymère, selon un procédé d'addition de monomères, dans lequel on ajoute au moins 95 % des monomères à polymériser, dans des conditions de polymérisation, à un premier polymère particulaire d'ensemencement 1 se trouvant dans le réacteur de polymérisation, et dans lequel au cours de la polymérisation on ajoute au moins un autre polymère d'ensemencement 2 sous forme d'une dispersion aqueuse.

**10.** Procédé selon la revendication 9, dans lequel l'addition du polymère d'ensemencement s'effectue lorsque 10 à 60 % en poids des monomères à polymériser sont présents dans le réacteur de polymérisation.

**11.** Procédé selon la revendication 9 ou 10, dans lequel le polymère d'ensemencement 1 est utilisé en une quantité de 0,1 à 2 % en poids, par rapport aux monomères à polymériser.

**12.** Procédé selon l'une quelconque des revendications 9 à 11, dans lequel le polymère d'ensemencement 1 présente une taille de particule en moyenne en poids dans la plage de 10 à 150 nm.

**13.** Procédé selon l'une quelconque des revendications 9 à 12, dans lequel on utilise le polymère d'ensemencement 2 en une quantité de 0,05 à 2 % en poids, par rapport aux monomères à polymériser.

**14.** Utilisation d'une dispersion aqueuse de polymère selon l'une quelconque des revendications 1 à 8, dans des compositions d'autoadhésifs.

**15.** Utilisation selon la revendication 14 dans des compositions d'autoadhésifs pour films en matière plastique transparents, en particulier pour étiquettes en matière plastique transparentes.

Abbildung 1

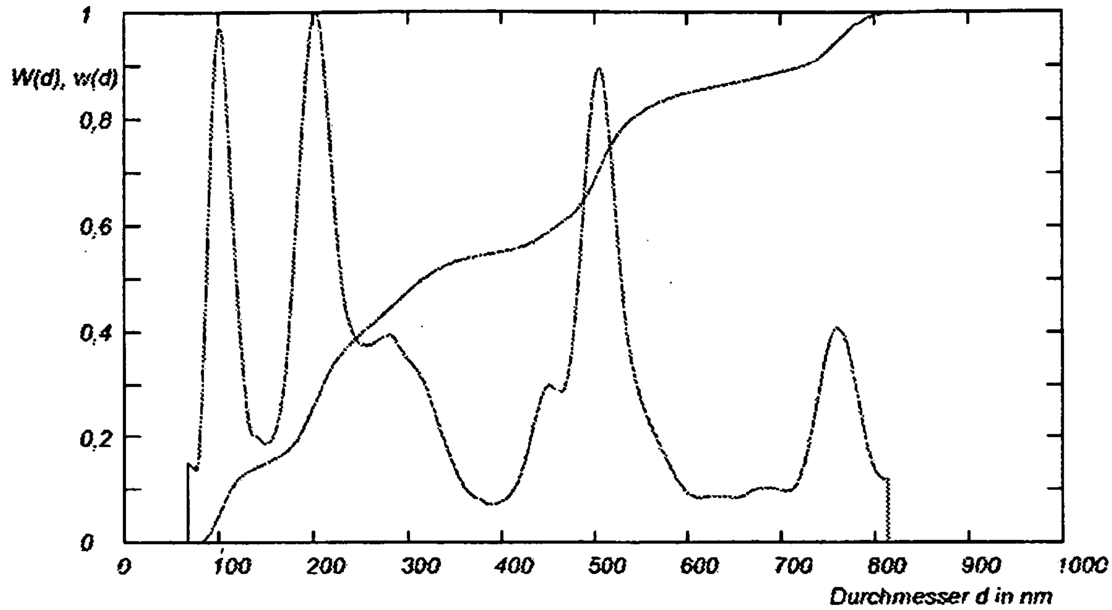


Abbildung 2

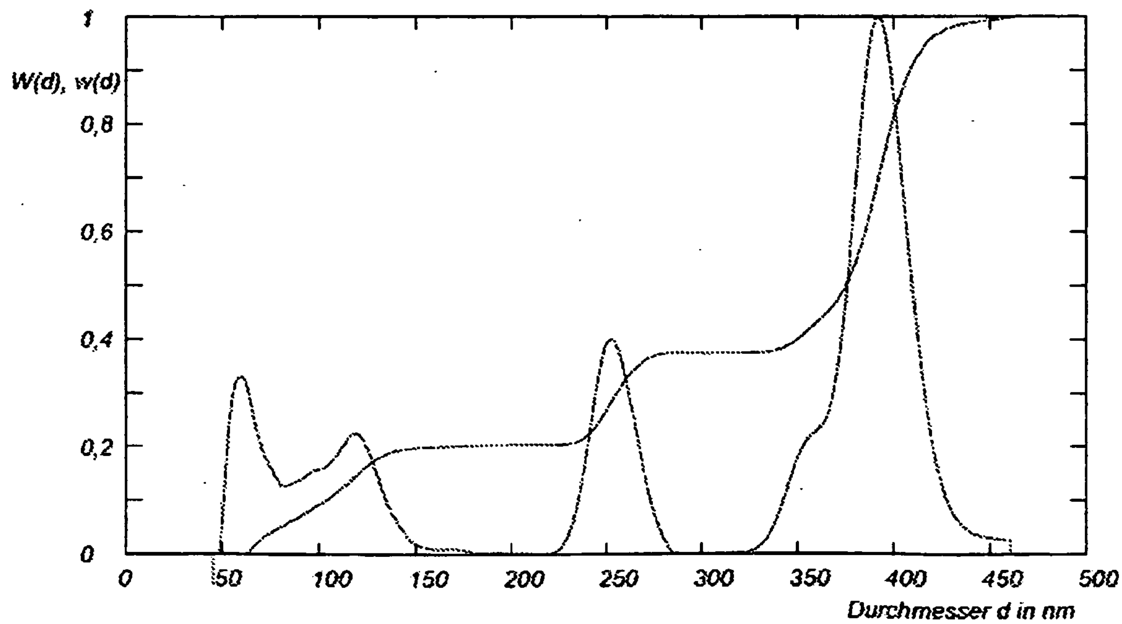

Abbildung 3

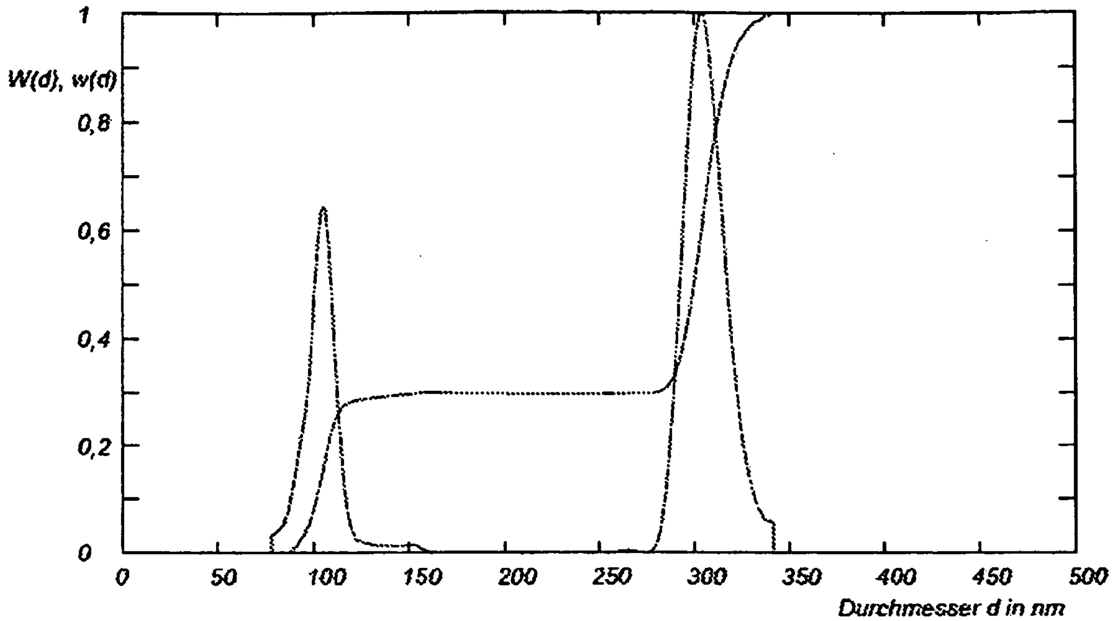


Abbildung 4

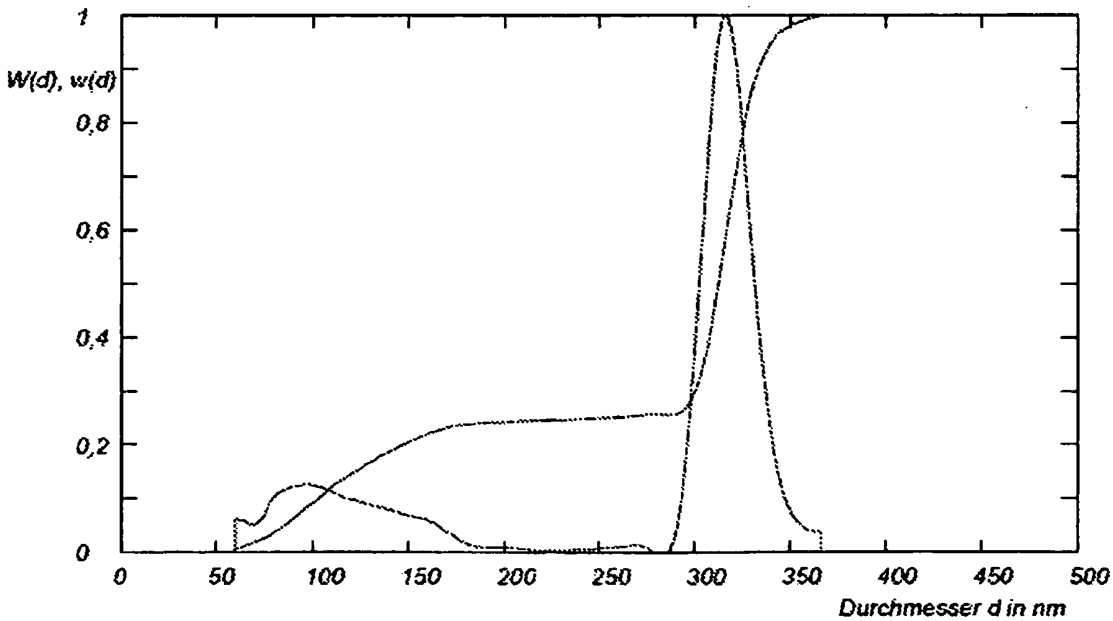

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9806763 A1
- WO 9807767 A1
- WO 0068335 A1
- EP 554832 A1
- EP 845518 A1
- US 6359092 B
- WO 9711996 A1
- EP 81083 A
- WO 8404491 A
- EP 8775 A
- DE 4435422 A
- DE 4435423 A
- DE 4419518 A


### In der Beschreibung aufgeführte Nicht-Patentliteratur


- Analytical Ultracentrifugation of Nanoparticles. **H. CÖLFEN.** Encyclopedia of Nanoscience and Nanotechnology. American Scientific Publishers, 2004, 67-88
- **W. MÄCHTLE ; L. BÖRGER.** Analytical Ultracentrifugation of Polymers and Nanoparticles. Springer, 2006
- **HOUBEN-WEYL.** Methoden der organischen Chemie, Band 14/1, Makromolekulare Stoffe. Georg Thieme Verlag, 1961, vol. 14-1, 192-208
- Analytical Ultracentrifugation of Polymers and Nanoparticles. **W. MÄCHTLE ; L. BÖRGER.** Analytical Ultracentrifugation of Polymers and Nanoparticles. Springer, 2006
- Analytical Ultracentrifugation. **W. MÄCHTLE et al.** Biochemistry and Polymer Science. Royal Society of Chemistry, 1992, 147-175
- **W. MÄCHTLE.** *Makromolekulare Chemie,* 1984, vol. 185, 1025-1039